(19) Europäisches Patentamt
European Patent Office
Office européen des brevets

(11) **EP 4 322 131 A1**

(12) **EUROPÄISCHE PATENTANMELDUNG**

(43) Veröffentlichungstag:
**14.02.2024  Patentblatt 2024/07**

(21) Anmeldenummer: **22190257.0**

(22) Anmeldetag: **12.08.2022**

(51) Internationale Patentklassifikation (IPC):
**G08G 1/127** (2006.01)      **H04W 4/029** (2018.01)
**G08G 1/01** (2006.01)       **G06Q 50/30** (2012.01)

(52) Gemeinsame Patentklassifikation (CPC):
**G08G 1/0112; G06Q 50/40; G08G 1/012;**
**G08G 1/0129; G08G 1/127; H04W 4/029**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **iunera GmbH & Co. KG**
**69190 Walldorf Baden-Wuerttemberg (DE)**

(72) Erfinder: **Frey, Tim**
**74855 Hassmersheim (DE)**

(54) **EINE ERFINDUNG ALS SYSTEM, VERFAHREN ODER ANORDNUNGEN ZUM ZUORDNEN VON FAHRDATEN**

(57)   Die vorliegende Erfindung (1200) betrifft ein System oder Anordnungen und/oder Verfahren zum Zuordnen von Fahrdaten, wobei ein System oder eine Anordnung zumindest folgende Merkmale aufweisen:
a. Zumindest einmaliges Erzeugen zumindest eines Fahrtschlüssels (1030) FS-A von zumindest einer Fahrt (500) A;
b. Zumindest einmaliges Erzeugen zumindest eines weiteren Fahrtschlüssels (1030) FS-B von zumindest einer weiteren Fahrt (500) B;
c. Zumindest die Fahrtschlüssel (1030) FS-A und FS-B unter dem Nutzen von zwei oder mehreren Wegpunkten 999 erzeugt werden;
d. Zumindest eine Übereinstimmungsprüfung (1130) von zumindest einem FS-A und zumindest einem FS-B;

**Fig. 1b**

**Beschreibung**

1. Technisches Gebiet

Die vorliegende Erfindung betrifft Systeme, Verfahren und Anordnungen, um Daten in verschiedenen Systemen abzugleichen und übereinstimmende Datensätze einander zuzuordnen. Insbesondere umfasst die Erfindung daher insbesondere solche Systeme, Verfahren und Anordnungen, bei denen Dokumente über eines oder mehrere mobile Computernetzwerke ausgetauscht werden und die Dokumente Geodaten enthalten. Dabei wurde die Erfindung besonders unter Betrachtung von in verschiedenen Systemen vorhandenen Geodaten entwickelt, die sich über Zeiträume hinweg verändern.

2. Stand der Technik

Im öffentlichen Personennahverkehr wirkt eine Vielzahl von Systemen, wie z.B. in Fahrzeug, Leitstellen, Smartphone Apps, Personenzählsysteme und Anzeigetafeln, zusammen.

Oftmals existiert das Problem, dass die Systeme über eine unterschiedliche Datenbasis verfügen und daher Daten aus einem System einem anderen System nicht direkt zuordenbar sind. Ein Beispiel hierfür sind Belegungszählsensoren, Fahrpläne 1010 und Echtzeit-Fahrtdaten 1050.

Fahrpläne 1010 oder Fahrplansysteme 1010 enthalten Soll-Zeiten 3060 für jede einzelne geplante Fahrt 500. Durch Fahrpläne 1010 werden Fahrten 500 in der Form von Haltestellen 999 und Linien, Abfahrtszeiten 3060 und Richtungen zugeordnet. Ergänzt werden diese Plandaten oftmals durch die Soll-Zeiten 3060/1010 vom Ist-Daten-Server, durch welche Abweichungen 3060/1050 in den Fahrzeiten und Ausfälle von Haltestellen 999 gemeldet werden. Oftmals werden zudem Personenzählsysteme in Fahrzeugen eingesetzt, die Einsteiger und Aussteiger zählen. Die Zuordnung Belegungen zu Haltestellen, Linien und Fahrten 500 ist jedoch im Regelfall zuerst unbekannt, da der Einsatz von Personenzählsystemen auf Fahrten 500, Linien 500 und Abweichungen erst durch manuelle Zuordnungen vorgenommen werden muss. Beispielsweise werden so semi- oder ganz manuell Tabellen geführt, welche Zählsysteme in welchen Fahrzeugen eingesetzt werden und welche Fahrzeuge auf welchen Fahrten 500 und Linien 500 genutzt werden. Diese Tabellen werden dann im komplizierten Verfahren genutzt, um Fahrpläne 1010, Daten des Verbundes und Zählsysteme einander zuzuordnen, um dadurch dann Belegungen ableiten zu können.

Es existiert daher das Problem Linienzuordnungen 500 von Zählsystemen ohne manuelle Tabellen oder Listen durchzuführen.

Doch nicht nur die Zuordnung von Personenzählsystemen zu Linien 500 und Fahrten 500 stellt ein Problem dar. Vielmehr können solche Zuordnungen z. B. auch Smartphones von Passagieren sein, die automatisiert einer Fahrt 500 und Linie 500 zugeordnet werden sollen.

Generell stellt sich somit das Problem, dass eine Vielzahl von Systemen und Datenbasen im Einsatz sind, deren Daten letztendlich miteinander verknüpft werden sollen. Dadurch, dass aber keine gemeinsame Abbildung existiert, wird nun eine technische Lösung gesucht, um die Daten möglichst fehlerfrei und ohne manuelle Zuordnungen miteinander zu verknüpfen.

3. Zusammenfassung der Erfindung

1. Die vorliegende Erfindung 1200 löst die oben beschriebenen Probleme. In einer Ausführungsform kann die eine Variante der Erfindung 1200 die folgenden Merkmale aufweisen:

    a. Zumindest einmaliges Erzeugen zumindest eines Fahrtschlüssels 1030 FS-A unter der Nutzung von zumindest einem Wegpunkt 999 zumindest einer Fahrt 500/1010 A;

    b. Zumindest einmaliges Erzeugen zumindest eines weiteren Fahrtschlüssels 1030 FS-B aus unter der Nutzung von zumindest einem Wegpunkt 999 zumindest einer weiteren Fahrt 500/1050 B;

    c. Zumindest einmalige Überprüfung von zumindest einem FS-A und FS-B auf Übereinstimmung 1130;

    d. Zumindest eine Entscheidung über zumindest eine Zuordnung 1110 von Fahrt 500/1010 A von zumindest einer Fahrt 500/1050 B, aufgrund zumindest einer Prüfung auf Übereinstimmung 1130 in c.

Wegpunkte 999 sind dabei Geopositionen 999 von einem System oder einen Gerät. Beispielsweise können Haltestellen 999 oder Fahrtverläufe aus Geopositionen 999 solche Wegpunkte 999 darstellen. Auch ist es möglich das regelmäßige neue Standorte 999 eines Mobilgeräts, wie z.B. durch GPS oder Funkortung, als Wegpunkte 999 verwendet werden. Aus diesem Grund wird in dieser Erfindung 1200 kein Unterschied zwischen Wegpunkten 999, Haltestellen 999, Standorten 999 und GPS Positionen 999 gemacht.

Eine Fahrt 500, Fahrtdaten 1050, Linien 500 oder auch konkrete Fahrten 500 bezeichnen dabei z. B. eine Ansammlung von Wegpunkten 999. Solche Wegpunkte 999 können in Fahrtdaten 1050 z. B. auch mit verschiedenen Zeiten (z. B. Soll- 3060/1010 oder Ist-Abfahrtszeiten 3060/1050) oder Zeitintervallen zu anderen Wegpunkten 999 verknüpft sein. Somit kann eine Fahrt 500 z. B. eine Linie 500 eines Fahrplans 1010 aus Wegpunkten 999 bestehen und mit Zeiten 3060 oder Zeitintervallen verknüpft sein. Auch kann eine Fahrt 500 ein spezifisches oder auch unspezifisches Fahrzeug (und somit eine Fahrt 500) sein, dass eine Linie 500 an einem speziellen Tag oder zu einer Tageszeit abfährt. Ein weiteres Beispiel für eine Fahrt 500 ist eine Passagierfahrt 500, dessen Standortinformationen 999 aufgezeichnet werden, wenn er an Bord eines Fahrzeuges ist. Selbstverständlich können auch technische Geräte, wie z. B. dass selbst Belegungszählsysteme, die in einem Fahrzeug verbaut sind, Fahrten 500 oder Fahrtdaten 1050 darstellen, indem die Geräte regelmäßig Wegpunkte 999 und ggf. Uhrzeiten 3060/3030 zugeordnet werden.

Fahrtschlüssel FS-A und FS-B (Fahrtschlüssel A und Fahrtschlüssel B) 3090/1030/3030/1170 stellen einen Bezeichner dar, der aus Fahrten/Fahrtdaten 500/1050, z. B. aus Wegpunkten 999, berechnet wird. Es ist dabei besonders hervorzuheben, dass die Fahrtschlüssel 1030 dabei besonders bevorzugt durch Regeln aus Fahrtdaten(Fahrten) 1050/(500) erzeugt werden können. Beispielsweise kann eine solche Regel Geopositionen 999 aus den Wegpunkten 999 einer Fahrt 500 verwenden und daraus einen Fahrtschlüssel 1030 berechnen. Somit ist es dann z.B. möglich aus Geopositionen 999 präzise oder verunschärfte Zeiten 3060/1050/1010 (z.B. Abfahrtszeiten, Ankunftszeiten, Durchfahrtszeiten) zuzuordnen und natürliche kollisionsfreie oder kollisionsarme behaftete natürliche Schlüssel als sogenannte Fahrtschlüssel 1030 zu berechnen. Kollisionen sind dabei, wenn zwei unterschiedliche Datensätze zum selben Fahrtschlüssel-Wert 1030 führen. Dieses Ereignis wird als Kollision bezeichnet und Fahrtschlüssel 1030 verfügen über die Eigenschaft besonders kollisionsarm zu sein.

Eine Überprüfung auf Übereinstimmung 1130/1200 prüft, ob Fahrtschlüssel 1030 gleich sind oder inwiefern diese eine Abweichung voneinander haben. Solche Ergebnisse 1210 von Prüfungen auf Übereinstimmung 1130 oder die Abweichungen werden dann in Entscheidungen 1140 verwendet, ob Daten von Fahrten 500 letztendlich gleich/zuordenbar sind.

Somit ist die Erfindung 1200 nicht, wie der Stand der Technik, eine reine Einheit, die Zuordnungen von Datensätzen anhand von trivialen Listen ermöglicht, sondern stellt eine Lehre bereit, wie Datensätze von Fahrten 500/1010/1050 ohne Listen aus unterschiedlichen Systemen einander zugeordnet werden können.

Ganz im Gegensatz zum Stand der Technik, bei der Datenzuordnungen schon in der Systeminteraktion beachtet werden müssen, besitzt die Erfindung 1200 somit die besonders vorteilhafte Fähigkeit Überprüfungen auf Übereinstimmungen 1130 von Fahrtdaten 1050 autonom vorzunehmen und hierdurch klare Aussagen über die Zuordnung von Datensätzen aus verschieden Systemen zu treffen. Somit können Datensätze aus verschieden Systemen einfach und unkompliziert zusammengeführt werden. Die Notwendigkeit beim Systemaufbau komplizierte Synchronisations- und Abgleichsmechanismen zwischen Systemen einzuführen entfällt somit durch die Erfindung 1200.

2.
In einer speziellen Ausführung wird die Erfindung 1200 dazu verwendet, um Fahrtdaten 1050 aus Belegungssystemen, Fahrten 500 eines Fahrzeugs zuzuordnen und hierdurch zumindest eine Belegung zu berechnen.

Belegungssysteme zeichnen oftmals nur Einsteiger und Aussteiger auf. Durch die Erfindung 1200 wird es z.B. trivial diese Einsteiger aus Aussteiger-Daten Linien 500 und konkreten Fahrplanfahrten 1010/500 zuzuordnen. Durch diese Zuordnung können dann aus Einsteiger- und Aussteigerdaten, durch einfache oder komplizierte Regeln, Belegungen eines Fahrzeuges berechnet werden. Beispielsweise kann eine Regel eine Berechnungsvorschrift für zugeordnete Fahrten 500 wie folgt sein:

$$\text{Neuer Belegungszähler} = \text{Letzter Belegungszähler} + \text{Einsteiger-Aussteiger}$$

Diese Rechenvorschrift wird dabei iterativ für eine Fahrt 500 durchgeführt, wobei der erste Belegungszähler bei 0 startet und dann im weiteren Verlauf immer die am letzten berechnete Belegung verwendet wird.

Besonders vorteilhaft können bei solchen Berechnungsregeln durch die Übereinstimmungsergebnisse 1130/1210 oder konkrete Fahrtenzuordungen 1110 verwendet werden. Dies ist von besonderem Vorteil, da durch die Fahrtenzuordungen 1110 feststellbar ist, ob Einstiege oder Ausstiege an Start- oder Endhaltestellen stattgefunden haben, um ggf. falsche Zähldaten zu filtern und den Belegungszähler auf 0 zu setzen.

3.
Eine besonders vorteilhafte Ausführung der Erfindung 1200 ist spezialisiert, um Wegdaten 999 von einem Smartphone (Passagier Smartphone Fahrt 500) zumindest einer weiteren Fahrt 500 zuzuordnen. Dies bedeutet die Wegdaten 999 eines Smartphones stellen somit eine Fahrt B 500 bzw. deren Fahrtdaten 1050 dar, die dann auf Übereinstimmung 1130 mit zumindest einer weiteren Fahrt 500 A geprüft werden (oder natürlich mehreren Fahrten A 500), indem z.B. Fahrtschlüssel 1030 FS-A und FS-B auf Übereinstimmung 1130 geprüft und dann zumindest eine Entscheidung 1140 über eine Zuordnung 1110 getroffen wird. Somit ist es sehr leicht möglich z.B. Apps für ein Mobiltelefon zu entwickeln, die GPS Daten 999 aufnehmen und diese GPS Daten 999 dann Fahrplan-Fahrten 1010, wie z.B. konkreten Linien 500/1010 zuordnen.

Somit kann man sich vorstellen, dass Passagiersmartphones (Passagier Smartphone Fahrten 500/1050) oder rein deren aufgenommen GPS Daten 999 sehr einfach auf Übereinstimmungen 1130 mit anderen Fahrten 500/1010 geprüft werden kann. Beispielsweise können somit auch Überprüfungen durchgeführt werden, ob mehrere Passagiere in der gleichen Fahrt 500 sind oder waren. Auch historische Fahrtdaten 500/1050 von einem Smartphone lassen sich somit konkret Fahrplänen 500/1010 in Formen zuordnen, die vorher nicht möglich waren.

Beispielsweise ermöglicht es dies besonders vorteilhaft Smartphone-Benutzern auf einem (z.B. Smartphone oder Smartwatch) Display die derzeitige Fahrt 500 Zuordnungen 1110 zu Fahrplänen 500/1010 anzuzeigen und/oder in Echtzeit Hinweise, aufgrund von dem erkannten Fahrtverlauf, darzustellen. Beispielsweise können so die nächsten Haltestellen 999 oder geplante Anschlüsse an der nächsten Haltestelle 999 zielgenau auf einem Display angezeigt werden.

Weiterhin ermöglicht eine z.B. dadurch besonders vorteilhaft durchgeführte Linienerkennung/Zuordnung 500/1110 von Passagier-Smartphones, eine Zählung von Belegungen auf einer Strecke 500 oder auch um Umstiege zwischen Linien 500 zuzuordnen. Dies hilft besonders, um Haltestellen 999 genau erkennen zu können, in welchen Teilstrecken (letztendlich sind Teilstrecken im Sinne der Erfindung auch Fahrten 500) von Linien 500 Passagiere fahren oder wo und wie diese umsteigen. Dies ist mit herkömmlichen Belegungszählsystemen und ohne Streckenzuordnung 1110 nicht möglich. Eine Berechnung der Belegung kann dabei z.B. dadurch durchgeführt werden, indem die erkannten Passagiere auf Strecken aufsummiert werden und diese Daten dann in Belegungsberechnungen einfließen. Beispielsweise können so aufsummierte Daten mit Daten aus Belegungszählsystemen hochgerechnet oder anderweitig abgeglichen werden.

In besonders vorteilhaften Ausführungen der Erfindung 1200 können zudem die Belegungen aus einem Belegungszählsystem mit Daten von Belegungen aufgrund von erkannten Smartphone-Streckenzuordnungen 1110 kombiniert werden, um besonders zielgenau Streckenbelegungen über mehrere Haltestellen 999 und Ausoder Umstiege hochzurechnen oder vorherzusagen.

4.
Um Übereinstimmungen 1130 besonders gut prüfen zu können, kann besonders vorteilhaft eine Zeitkomponente 3060 bei der Fahrtschlüsselerzeugung 1120 neben Wegpunkten 999 mitverwendet werden.

Beispielsweise kann eine solche Zeitkomponente 3060 eine geplante oder tatsächliche Abfahrt-Anfahrt 3060 oder Durchfahrtszeit 3060 eines Wegpunktes 999 sein, die dann als präzise gerundete (z.B. auf Minuten oder Stunden) oder verunschärfte einem oder mehreren Wegpunkten 999 zugeordnet wird, um durch diese Zuordnungen 1110 besonders kollisionsarme Fahrtschlüssel 1030 zu erzeugen 1120.

Solche Fahrtschlüssel 1030 sind besonders vorteilhaft, da durch die Zeitkomponente 3060 Kollisionen von Fahrtschlüsseln 1030 unterschiedlicher Fahrten 500 minimiert werden und somit besonders schnell und effizient Prüfungen nach Übereinstimmungen 1130 und dadurch letztendlich Zuordnungen 1110 von Fahrten aus verschiedenen Systemen möglich sind.

5.
In einer Spezialisierung der Erfindung 1200 ist diese insbesondere darauf ausgelegt, dass Fahrten 500/1050 B auf Übereinstimmung mit konkreten Fahrplänen 500/1010 A oder Daten aus Fahrplansystem 500/1010 A geprüft werden (jeweils ist natürlich eine Vertauschung von A und B möglich). Ein Fahrplansystem 500/1010 kann hierbei natürlich auch Dokumente aus einem Fahrplansystem 500/1010 oder einer Schnittstelle dessen darstellen.

Es ist zu beachten, dass Fahrpläne 500/1010 heutzutage insbesondere über sogenannte elektronische Fahrplan-Auskunftssysteme 500/1010 verfügbar sind, die über ein Computernetzwerk abgerufen werden können. Hierbei können Fahrpläne 500/1010 über Datenschnittstellen (sogenannte APIs), das Internet oder grafische Benutzerschnittstellen abgerufen werden und enthalten oftmals auch Echtzeitdaten über Verspätungen.

Diese besondere Ausführungsform der Erfindung 1200 kann gezielt Wegpunkte 999 und ggf. auch Zeiten 3060, wann die Wegpunkte 999 passiert werden, nutzen, und dann andere Fahrten 500 auf Übereinstimmung 1130 prüfen.

Dies ermöglicht es besonders bei verspäteten Fahrten trotzdem noch korrekte Zuordnungen zu Fahrplänen 500/1010 durchzuführen.

6.
Um Fahrtschlüssel 1030 besonders flexibel zu erzeugen 1120 und deren Übereinstimmung 1130 zu prüfen können Regeln verwendet werden. Solche Regeln können dabei Vorschriften sein, welche Werte bei der Erzeugung eines Fahrtschlüssels 1030 verwendet und wie diese auf Übereinstimmung 1130 geprüft werden.

Ein Beispiel ist es einen Wegpunkt 999 zu verwenden und diesen mit einer Tageszeit 3060 der geplanten Abfahrt 1010/1050, Durchfahrt oder Einfahrt zu verknüpfen. Hierbei können Regeln weiterhin den Wegpunkt 999 und die Tageszeit verunschärfen (auch genannt Granularitätsreduktion oder fuzzyfikation 1120) und somit wird dann ein unscharfer Fahrtschlüssel 1030 erzeugt.

Die Erzeugungsregeln 1120 können dabei insbesondere Fahrtschlüssel 1030 erzeugen, die einem festen Bitmuster folgen oder deren einzelne Bestandteile für die Überprüfung klar definiert sind. Dies hat den Hintergrund, dass somit schnelle bitweise Überprüfungen möglich werden. Ein Wegpunkt 999 kann z.B. eine genau Geosposition 999 bis auf 2 Nachkommastellen sein, aber auch 5 Nachkommastellen haben oder auch durch einen Geohash in verschiedener Granularität ausgedrückt werden. Damit bei einem späteren Übereinstimmungsvergleich 1130 z.B. Nachkommastellen aufgefüllt werden können, sind daher die Erzeugungsregeln 1120 klar definiert oder die Erzeugung der Fahrtschlüssel 1030 folgt einem klaren Bitmuster in welchem z.B. nicht existierende Nachkommastellen mit 0 Werten aufgefüllt werden.

Überprüfungen auf Übereinstimmungen 1130 von Fahrtschlüsseln 1030 können dann auch aufgrund von Regeln durchgeführt werden. Beispielsweise kann bei einer Überprüfung die absolute Gleichheit von Fahrtschlüssel 1030 geprüft werden. Es ist aber auch möglich Abweichungen von Fahrtschlüssel 1030 durch Abstände der Fahrtschlüssel 1030 zueinander zu bewerten. Dies kann z.B. durch einfache mathematische Funktionen, wie z.B. Hamming Distanzen der Binärwerte oder auch Levenshtein-Distanzen oder Ähnliches geschehen.

Ein Beispiel zur Berechnung von Abständen/Abweichungen von Fahrtschlüsseln 1130 durch eine Hamming Distanz: Unter dem Hamming-Abstand eines Codes versteht man das Minimum aller Abstände zwischen verschiedenen Wörtern innerhalb des Codes und die Anzahl der "nicht Übereinstimmungen 1130 wird aufsummiert. D.h. man kann sich folgende ins binäre übersetzte Fahrtschlüssel 1030 vorstellen:

A=00110
B=00101
C=01110

Der Hamming-Abstand zwischen A und B ist 2. Der Abstand zwischen A und C ist 1 und zwischen B und C ist er 3.

Wie zu sehen ist können somit besonders einfach Fahrtschlüssel 1130 erzeugt werden und deren Vergleiche/Übereinstimmungsprüfung 1130 werden durch Regeln einfach möglich. Hierdurch werden auch Abstände bei der Prüfung auf Übereinstimmung 1130 zwischen den Fahrtschlüsseln 1030 berechnet, was besonders vorteilhafte Beurteilungen auf Fahrtengleichheit/Fahrtenzuordnung 1110 ermöglicht.

7.

Durch Regeln können die Granularitäten Fahrtschlüssel 1030 reduziert werden. Eine solche Reduktion entspricht dabei einer Verunschärfung/Fuzzifizierung/Granularitätsreduktion 1120. Beispielsweise können die Geokoordinaten 999 von Wegpunkten 999 reduziert werden, indem diese Kacheln oder Indexen zugeordnet werden oder indem Nachkommastellen von Geokoordinaten 999 gerundet oder abgeschnitten werden. Fahrtzeiten 3060 können z.B. verunschärft/fuzzifiziert 1120 werden, indem Stunden in 6 - 10 Minuten Blöcke eingeteilt werden, in welche dann die Fahrtzeiten eingeordnet werden (d.h. Block 1: 0-9 Minuten, Block 2: 10-19 Minuten, Block 3: 20-29 Minuten, Block 4: 30-39 Minuten, Block 5: 40-49 Minuten, Block 6: 50-59 Minuten).

Somit können besonders vorteilhaft verlegte Wegpunkte 999, wie z.B. Haltestellen 999 (die durch Baustellen temporär um einige Meter verlegt sind) mitsamt verspäteten Fahrten trotz dessen noch zu Fahrtschlüsseln 1030 führen, die z.B. noch auf einen Fahrplan 1010 und daraus abgeleiteten Fahrtschlüsseln 1030 abbildbar sind.

Dies ermöglicht es somit besonders vorteilhaft auch bei sich verändernden Realweltbedingungen die Fähigkeiten der Erfindung 1200 zu nutzen.

8.

Man beachte, dass die Erzeugung von Fahrtschlüsseln 1120/1030 oftmals zu Ergebnissen führen kann, die in Grenzbereichen liegen. Beispielsweise kann eine leichte Verspätung dazu führen, dass eine Fahrt, die ursprünglich am Ende einer Stunde geplant war, sich durch die Verspätung in eine neue Stunde verschiebt.

Ein Beispiel aus 7 wäre es, dass sich eine Fahrt 500 in einen neuen 10 Minuten Block verschiebt.

Um diese Herausforderung zu lösen, kann die Erfindung 1200 besonders vorteilhaft mehrere Fahrtschlüssel 1030 erzeugen. So können beispielsweise "Nachbarblöcke" oder die Stunde zuvor und danach verwendet werden, um daraus einen weiteren Fahrtschlüssel 1030 zu erzeugen. Ebenfalls ist dies natürlich auch mit benachbarten Wegpunkten 999 (wie z.B. durch benachbarte Geohases oder Kacheln) möglich.

Somit kann eine Fahrt 500 direkt mehreren Fahrtschlüsseln 1030 zugeordnet werden, was es ermöglicht somit mehrere Fahrtschlüssel 1030 mit Fahrtdaten 1050 aus einem anderen System zu vergleichen, was die Wahrscheinlichkeit Übereinstimmungen 1130 selbst bei Fahrplanabweichungen aufzufinden vergrößert.

9.

Fahrtschlüssel 1030 sind oftmals nicht eindeutig, da Fahrten 500 verschiedener Linien 500 oftmals Wegpunkte 999 teilen. Oftmals ist es nicht sofort möglich Fahrten 500 eindeutig zuzuordnen. Um dieses Problem zu lösen verfügt eine besonders vorteilhafte Ausführung der Erfindung 1200 über weitere Mittel.

Hierfür bestimmt die Erfindung 1200, wie zuvor beschrieben, mehrere Fahrtschlüssel 1030 für Fahrten 500 und deren Übereinstimmung 1130 wird in mehreren Übereinstimmungsprüfungen 1130 bestimmt und danach zusätzlich quantifiziert. Durch diese Quantifizierung werden somit Distanzen/Abstände in Zahlen sichtbar gemacht, die Fahrten 500 aus verschiedenen Systemen zu einander haben. Die letztendliche Zuordnungsentscheidung 1140 dieser Fahrten 500 kann somit diese Distanzen/Abstände beachten und somit besonders treffsichere Ausgaben davon erzeugen, ob die Fahrten 500 übereinstimmen.

Somit ist diese Ausführung der Erfindung 1200 besonders vorteilhaft bei der Zuordnung von mehreren Systemen und Fahrten 500 nutzbar. Es ist somit durch die Quantifizierung möglich sogar Wahrscheinlichkeitsindikatoren auszugeben, welche Fahrten 500 generell übereinstimmen können. In einer Anwendung kann man sich vorstellen, dass Passagiersmartphonedaten oftmals nur kurze Strecken enthalten und Passagiere somit mit Wahrscheinlichkeiten verschiedenen Linien 500 zugeordnet werden können.

10.

In Anspruch 10 wird ein Variante der Erfindung 1200 beschrieben, die eine in 9 beschriebene Distanzquantifizierung durch das konkrete Zählen von Übereinstimmungen 1130 durchführt. Dies bedeutet, dass gezählt wird, wie viele der Fahrtschlüssel 1030 von Fahrt 500 A und Fahrt 500 B übereinstimmen. Dies wird auf mehrere potentielle Fahrten 500 A angewendet, um zu prüfen, welche der Fahrten 500 A mit welchem Zählerwert mit dem der Fahrt 500 B übereinstimmt. Jede Übereinstimmung 1130 für jeden Fahrtschlüssel 1030 von jeder Fahrt 500 A und Fahrt 500 B wird somit gezählt. Mathematisch gesehen wird so ein Histogramm erzeugt, welches die Häufigkeit (Frequenz) der Übereinstimmung 1130 für jede der Fahrten 500 A zählt.

Diese Häufigkeit der Übereinstimmung 1130 wird dann in einer Entscheidung in i. verwendet, um eine Entscheidung 1140 zu treffen, welcher Fahrt 500 A die Fahrt 500 B letztendlich zugeordnet werden soll.

11./12.

In einer besonderen Ausführung werden für die Erzeugung 1120 von granularitätsreduzierten Fahrtschlüsseln 1030 spezielle besonders vorteilhafte Geodatenstrukturen 1120 verwendet.

Solche Strukturen können zum Beispiel Kacheln von Mercator Projektionen oder ein h3 Hexagon Geodatenindex 1120 sein, die es ermöglichen, dass Geoflächen oder Punkte 999 selbst wiederum in übergeordneten Indexen oder Kacheln vorhanden sind. Diese Strukturen ermöglichen es somit, durch sogenanntes Zoomen, die Granularität zu reduzieren 1120.

Diese Geodatenstrukturen 1120 werden besonders vorteilhaft eingesetzt, indem ein Wegpunkt 999 in eine solche Datenstruktur überführt wird (z.B. durch Zuordnung 1110 zu einer Kachel oder einem Hexagon). Eine Granularitätsreduktion 1120 kann durchgeführt werden, indem ein übergeordnetes Element der Geodatenstruktur 1120 bestimmt und fortfolgend als reduzierte Granularität verwendet wird. Ein Beispiel hierfür sind Mercator Projektionen, die unterschiedlichen Kacheln vorliegen, wobei jede Kachel einer Zoomstufe mehrere Kacheln von der Zoomstufe zuvor enthält.

Alternativ können auch Geohashes 4050 verwendet werden. Dies ist besonders vorteilhaft, da auch diese über die Fähigkeit der Granularitätsreduktion 1120 verfügen, indem diese einfach durch das Weglassen von Stellen auf die nächste Stufe zoomen.

12.

Eine besonders bevorzugte Ausführungsform der Erfindung 1200 ermöglicht die Ausgabe einer Entscheidung über zumindest eine Zuordnung 1110.

Eine solche Ausgabe kann dabei z.B. das Folgende sein:

- Ein oder mehrmaliges Speichern.
- Eine oder mehrmalige Weitergabe eines oder mehrerer Werte an Einheiten dieser Erfindung 1200.
- Eine oder mehrmalige Weitergabe eines oder mehrerer Werte an Verfahrensschritte dieser Erfindung 1200.
- Eine oder mehrmalige Weitergabe eines oder mehrerer Werte anderer Erfindungen oder Verfahrensschritte solcher.
- Eine oder mehrmalige physische Ausgaben, wie z.B. auf einem Display oder einem Drucker oder einer Ausgabe über ein Computernetzwerk.

Werte die ausgegeben werden sind z.B. welche Fahrt 500 zugeordnet wird oder welche Zuordnungen 1110 generell in Frage kämen und wie wahrscheinlich diese Zuordnungen 1110 bewertet wurden. Es ist auch möglich, dass eine Ausgabe spezifiziert, dass keine Zuordnung 1110 möglich ist.

Durch solche Ausgaben lassen sich nun z.B. besonders vorteilhaft Anzeigen für einen Benutzer auf einem Smartphone gestalten. Beispielsweise kann ein Benutzer auf einem Smartphone oder einer Smartwatch durch eine erfolgte Zuordnung 1110 automatisiert angezeigt bekommen auf welcher Linie (500) er sich derzeit bewegt und welches die nächsten Haltestellen 999, Anschlüsse, Verspätungen und ähnliches sind.

13.

Sofern Fahrten 500 von Passagieren und deren Smartphones Linien 500 zugeordnet werden, existiert das Problem, dass diese Passagiere aus dem Gefährt aussteigen. Wenn Personenzählgeräte in einem Fahrzeug eingesetzt werden, kann es sein, dass dieses Fahrzeug auf einer Linie 500 fährt, aber sich die Linie 500 ab einer bestimmten Haltestelle 999 ändert. Da durch die Erfindung 1200 eine Fahrtenzuordnung 1110 ermöglicht wird, behandelt ein weiterer Aspekt der Erfindung 1200 die zwei zuvor beschriebenen Problemstellungen.

Eine besonders bevorzugte Ausführungsform der Erfindung 1200 kann daher die Auflösung von zuvor erkannten Fahrtenzuordnungen 1110 erkennen. Hierzu prüft die Ausführungsform der Erfindung 1200, ob Fahrtschlüssel 1030 von Fahrten 500, die zuvor einander zugeordnet wurden, ab einem gewissen Wegpunkt 999 nicht mehr übereinstimmen.

Beispielsweise ermöglicht es dies bei einer Passagiersmartphone-Fahrt 500 festzustellen, ab wann die zugehörige Linie 500 verlassen wurde. Gleichfalls können somit bei Fahrzeugen mit Personenzählgeräten automatisiert Linienwechsel erkannt werden.

14.

Die vorliegende Erfindung 1200 betrifft ferner ein Verfahren für das Erstellen von Fahrtenzuordnungen 1110, wobei das Verfahren zumindest die folgenden Schritte aufweist:

a. Zuordnen von Wegpunkten 999 und Zeiten 3060 zu zwei oder mehr unterschiedlichen Fahrten 500/1010/1050.

b. Granularitätsreduktion 1120 von Wegpunkten 999 und Zeiten 3060.

c. Übereinstimmungsprüfung 1130 von zumindest zwei Fahrtschlüsseln 1030, die zumindest zwei unterschiedlichen Fahrten 500/1010/1050 zugeordnet sind.

d. Entscheidung 1140 über zumindest eine Fahrtenzuordnung 1110, aufgrund zumindest eines Ergebnisses 1210 zumindest einer Übereinstimmungsprüfung 1130.

15.

Zuletzt stellt die vorliegende Erfindung 1200 ein Computerprogramm bereit, das Instruktionen aufweist, um jedes in der Anmeldung beschriebene Verfahren auszuführen und/oder um eine der beschriebenen Anordnungen oder Systeme durch ein Computerprogramm einzeln oder in Kombination zu repräsentieren.

4. Kurze Beschreibung der Zeichnungen

Fig. 1a: Eine Ausführungsform der Erfindung 1200 als Verfahren

Fig. 1b: Eine Ausführungsform der Erfindung 1200 als Apparat, der Fahrtenzuordungen 1110 und Fuzzifizierungen/Granularitätsreduktionen/Verunschärfungen 1120 vornimmt

Fig. 1c: Eine Ausführungsform der Erfindung 1200, die Beispiele aufzeigt, wie benötigte technische Datenstrukturen verarbeitet werden.

Fig. 1d: Ein Beispiel für Wegpunkte 999 und Geopositionen 999, wie sie bei Fahrten 500 und in anderen Teilen der Erfindung 1200 vorkommen können.

Fig. 2a: Strukturelle Funktionsweise einer Ausführungsform der Erfindung 1200.

Fig. 2b: Beispiele von Fahrplan Abfahrten (z.B. Fahrt 500/1010 A).

Fig. 2c: Granularitätsreduktion 1120 von Wegpunkten 999 durch Geohashes 4050 und Kombination mit Zeitbuckets 4010 (20 Minuten Blöcke) in Fahrtschlüssel 1030 in Kombination mit deren Linien und Fahrtzuordung 500/1010 auf der Grundlage von 2b. D.h. jede Zeile in Fig. 2b resultiert jeweils im gleichen Zeilenindex 10 in Fig. 2c.

Fig. 2d: Beispiel einer Fahrt 500 (z.B. Fahrt 500 A oder B) und einem Wegpunkt 999 an einer Haltestelle 999 mit Soll und Ist Abfahrt 3060.

Fig. 2e: Granularitätsreduktion 1120 der Fahrt 500 aus 2d mit dem Erzeugen von zugehörigen Fahrtschlüsseln 1030 (z.B. FS-A und FS-B) bestehend aus Geohashes 4050, Zeitbuckets 4010 und Trennzeichen (:).

Fig. 2f: Beispiele zu Nachbarfingerprints von 2d aufgrund von benachbarten Geohashes 4050 und zeitlich angrenzenden Zeitblöcken 4010.

Fig. 2g: Ergebnis von Zuordnungen 1110 aufgrund von Fahrtschlüssel 1030 von Fig. 2e und Fig. 2c.

Fig. 2h: Quantifizierung des Zuordungsergebnisses 1110/1210 aus Fig. 2g als Histogramm.

Fig. 2i: Ein weiterer Halt/Wegpunkt 999 der Fahrt 500 aus 2d.

Fig. 2j: Abgeleiteter Fingerprint und Geohash 4050 aus 2i.

Fig. 2k: Zuordnung 1110 aus 2j und 2c,

Fig. 2l: Kombination aus 2k und 2h in einem Histogramm.

## 5. Detaillierte Beschreibung von bevorzugten Ausführungsformen

Definitionen:
Gleiche Beschriftungen durch Zahlen (Referenzen) im Text und Figuren zeigen den gleichen Sachverhalt. Oftmals ist ein Sachverhalt aus verschiedenen Blickwinkeln oder in einer verschiedenen Granularität zu betrachten, weshalb ein Sachverhalt oftmals durch verschiedene Zahlen (Referenzen) bezeichnet wird. Eine Nennung oder Nicht-Nennung einer Referenz stellt demnach keine Einschränkung dar, sondern vielmehr soll es dem Leser besonders einfach ermöglicht werden die Grafiken mit der oder den am besten verständlichen Sachverhalten in den Figuren zu verknüpfen, die im referenzierenden Text beschrieben werden.

Die Erfindung 1200 kann natürlich auch direkt oder indirekt mit einem oder mehreren Systemen zusammen wirken. Beispielsweise kann diese Teil eines Systems sein oder ein System kann auch ein Teil von der Erfindung 1200 sein. Das ermöglicht eine nahtlose Integration mit weiteren Systemen. Dadurch ergibt sich eine besonders vorteilhafte Verteilbarkeit, wie zum Beispiel in einem Computernetzwerk über mehrere Server.

Ein Computernetzwerk stellt dabei im Sinne dieser Erfindung 1200 immer einen möglichen Plural von Netzwerken dar und ist nicht nur auf ein Netzwerk beschränkt. Vielmehr können verschiedene Computernetzwerke als Gemeinsamkeit als Computernetzwerk bezeichnet werden. Weiterhin können Computernetzwerke, die mit anderen Computernetzwerken interagieren, selbst als Computernetzwerk bezeichnet werden. Aufgrund dessen ist in diesem Dokument der Ausdruck Computernetzwerke und Computernetzwerk als äquivalent anzusehen. Selbstverständlich stellen auch Mobilfunknetzwerke Computernetzwerke dar. Generell ist der Ausdruck Netzwerk in dieser Anmeldung mit dem Ausdruck Computernetzwerk gleichzusetzen.

Da die Erfindung 1200 insbesondere als datenverarbeitendes System/Verfahren/Anordnung konzipiert wurde, nutzt diese besonders vorteilhaft, aus dem Stand der Technik, bekannte Verfahren/Anordnungen/Systeme und Mechanismen aus, um bestmögliche Ausführungsresultate zu erzielen. Insbesondere können hierbei bekannte System/Verfahren/Anordnung aus dem Bereich Mikrochipgesteuerte Geräte, wie Computer oder Smartphones, verwendet werden. Aus diesem Grund bezieht sich die Erfindung 1200 an einigen Stellen auf die Verarbeitung von Daten. Unter dem Term Verarbeitung sind daher im Sinne der Erfindung 1200 z.B. das Nutzen der Daten in einem Computerprogramm, Berechnungen, Transformationen, Assoziation, Abfrage, Auswertung, die Ablage in einer oder mehreren Speichereinheiten oder ähnliche aus dem Stand der Technik bekannte datenverarbeitende Mechanismen und Verfahren zu verstehen.

In dieser Anmeldung und in den Ansprüchen wird die Bezeichnung Dokument oder ein geospezifisches Dokument 999 verwendet. Dokumente sind dabei nicht nur als Dokumente im klassischen Sinne zu verstehen. Vielmehr können Dokumente auch aktive Ressourcen sein, wie beispielsweise ein Webserver oder auch mehrere Webserver oder auch eine Datenbank oder auch mehrere Datenbanken, von denen dann die Informationen geladen werden. Dabei bezieht sich der Begriff Dokument auch auf mehrere Systeme oder auch über Computernetzwerke gekoppelte Systeme. Der Begriff Dokument ist demnach ein Sammelbegriff für alle möglichen Ausgaben einer Datenbasis oder auch eine Zusammenstellung von benutzererzeugten Daten. Ein Dokument kann z.B. dynamisch von einer Datenbasis generiert werden, weshalb eine Datenbasis im Rahmen der vorliegenden Erfindung 1200 als Quelle oder Kombination von Quellen oder Quellsystemen anzusehen ist, von dem Daten angefordert, geschrieben und/oder geändert werden können. Ein Dokument ist demnach eine logische Einheit, eine Partition, Komponente und/oder Unterteilung und trifft daher auch auf Teile von Dokumenten zu. Ausführungsformen der vorliegenden Erfindung 1200 können dabei die Strukturinformationen der Datenbasis nutzen, um Zugriffe auf die Datenbasis oder darin vorkommende Dokumente zu verbessern und/oder zu beschleunigen. Beispiel für solche Strukturen sind Schlüssel-Wert Kombinationen, Tabellen, CSV Dateien, Bäume und ähnliches.

Geospezifische Dokumente 999, oder auch Geodaten 999 oder Geopositionen 999 sind daher Dokumente, die mit einer oder mehreren Geoinformationen 999 assoziiert sind oder diese selbst beinhalten. Solche Geoinformationen 999 können z.B. Längengrad, Breitengrad und Höhe sein. Zusätzlich zu der reinen Koordinaten-Abbildung können Geodaten 999 natürlich auch Region- oder Länderbezeichner oder Länder ISO codes oder ähnliches darstellen, um grobgranularer mit den Daten zu arbeiten.

Ein Fahrplan 1010/500 enthält Wegpunkte 999 zu welcher Uhrzeit ein Vehikel gewisse Geopositionen 999 durch Ankunft, Abfahrt oder Durchfahrt 3060 passiert. Wegpunkte 999 können dabei Geopositionen 999 von Haltestellen 999, Plattformen, Haltestellensteigen oder auch Streckenpunkte auf der Route sein. Ein solcher Fahrplan 1010 kann z.B. in der General Transit Feed Specification oder durch Soll-Daten-Schnittstellen/ Dokumenten und Datenstrukturen des VDV (VDV-Schrift 451,VDV-Schrift 452 - https://www.vdv.de/oepnvdatenmodell.aspx) erfolgen. Alternativ zu einem statischen Fahrplan 1010 kann auch ein dynamischer Fahrplan aus einem elektronischen Fahrplan-Auskunftssystem 1010 abgerufen werden (Siehe auch Elektronischer Fahrplan in Wikipedia https://de.wikipedia.org/wiki/Elektronische_Fahrplanauskunft).

Ein Fahrplan 1010 ordnet somit einer oder mehreren Fahrten 500 die Streckenpunkten/Wegpunkten 999, Kalenderdatum und Bewegungsrichtungen zu. Haltestellenspezifisch in einem Fahrplan 1010 sind Ankunft-und Abfahrtsdaten 3060. Weiterhin kann auch ein Fahrplan 1010 Daten über den detaillierten Linienverlauf 500 mit Wegpunkten 999 neben Haltestellen 999 und Durchfahrtszeiten 3060 der Wegpunkte 999 enthalten.

Generell wird die Erfindung im Regelfall dazu genutzt, um eine konkrete Fahrt B 500/1050 mit mehreren Fahrten A 500/1010 zu vergleichen. Da Fahrt A 500 und Fahrt B 500 auch mehreren Fahrten 500 entsprechen können, wird in dieser Anmeldung auch oftmals eine konkrete Fahrt 1050 mit Fahrt A, Fahrt B' oder Fahrt A" bezeichnet, um mehrere Fahrten 500 zu unterscheiden, wenn es dem Verständnisgewinn bei dieser Anmeldung dient und mehrere konkrete Fahrten 500 verglichen werden. Beispielsweise wird die Erfindung genutzt, um eine konkrete Fahrt B 1050 eines Passagiers auf mehrere Fahrplanfahrten 1010 wie Linie 1 (Fahrt A'), Line 2 (Fahrt A"), Line 3 (Fahrt A''') zuzuordnen, um festzustellen auf welcher Linie/Fahrt A der Passagier fährt. Ebenfalls wird selbiges Vorgehen bei Fahrtschlüsseln 1030 FS-A und FS-B in der Form von FS-A',FS-B', FS-A",FS-B" usw. verwendet. Durch die Bezeichner ','','''' usw. wird somit rein das Verständnis erhöht, weshalb die Erfindung 1200 in ihren Ausführungsformen und ihrer Generalität und Ansprüchen nicht in irgendeiner Weise von den Bezeichnern eingeschränkt werden soll.

Figuren:

Beispiele für verschiedenen Ausführungsformen der Erfindung 1200 oder Teile derer sind in den Figuren gegeben. Wir zeigen hierbei Figuren und Beispiele, dass ein mit dem Stand der Technik vertrauter Experte durch diese Beschreibung die Ausführungen der Erfindung 1200 mit den in den Ansprüchen definierten Merkmalen umsetzen kann.

Fig. 1a

zeigt eine Ausführungsform der Erfindung 1200. Wie zu sehen ist, können durch die Erfindung 1200 verschiedene Fahrtschlüssel 1030, wie z.B. eine Linie 500 zu einem Fahrzeug oder Zählsystem, einander zugeordnet werden. Dies geschieht wie folgt:

Im ersten Schritt 1100 werden hier zumindest zwei unterschiedliche Fahrtdaten 1050 verwendet und diesen werden dann jeweils deren Wegpunkte 999 zu den Zeiten 3060 zugeordnet.

Zeiten 3060 können dabei spezifische Kalendertageszeiten (Kalendertag mitsamt Uhrzeit) sein, Wochentagzeiten (Tagesuhrzeit kombiniert mit Wochentag), aber auch einfach nur Uhrzeiten 3060 sein.

Eine Fahrt und deren Daten kann Systemen wie z.B. ein Smartphone eines Passagiers entsprechen, welches GPS Positionen 999 aufnimmt. Somit entsprechen Fahrtdaten 1050 im Sinne der Erfindung Fahrten 500 und stellen rein die Manifestation ihrer Daten dar. Somit sind Fahrtdaten 1050 Linien 500, Routen, Fahrzeuge, Züge (mitsamt Wagenkonfiguration), Umlaufnummern und ähnliches was eine Fahrt 500 kennzeichnet. Ein weiteres Beispiel für einen Fahrtdatum 1050 ist ein Zählsystem und dessen Daten in einem Fahrzeug. Aus diesen Fahrtdaten werden nun Wegpunkte 999 und Zeiten 3060 bestimmt und zwei oder mehreren Fahrten 500 zugeordnet, wie z.B. eine Zuordnung 1110 von Fahrt A 1010 und Fahrt B 1050 zu Zeiten 3060 und Wegpunkten 999.

Im nächsten Schritt werden die zuvor zugeordneten F ahrtzuordungen 500/1110 verwendet und die Granularität von Zeiten 3060 und deren zugeordnete Wegpunkte 999 wird reduziert 1120. Hierdurch werden sogenannte Fahrtschlüssel 1030 erzeugt 1120. Ein Beispiel hierfür ist eine Erzeugung 1120 eines oder mehrerer Fahrtschlüssel A (FS-A) 1030/3090 und eines oder mehrerer Fahrtschlüssel B (FS-B) 1030/3030/1170.

Mit einer Reduktion der Granularität 1120 ist hierbei eine Anwendung von Fuzzifizierung 1120 im Sinne von Fuzzy logic 1120 ähnlichen Mechanismen gemeint. Im Speziellen werden scharfe physikalische Messgrößen von Zeit 3060 und Standort 999 durch Regeln in weniger scharfe Definitionen überführt.

Beispielsweise können Wegpunkte/Geopositionen 999 durch Mercator-Projektionen in Kacheln durch verschieden granulare Zoomlevel überführt werden. Alternativ können Geohashes 4050 verwendet werden, um Koordinaten in unscharfen Kacheln abzubilden. Weiterhin können Koordinaten 999 auch einfach abgeschnitten oder gerundet werden, um weniger granulare Positionen zu erhalten. Beispielsweise kann die GPS Position 999 49.3011638,9.1467748 zu 49.30,9.14 reduziert werden. Ebenfalls sind natürlich auch kompliziertere Regeln zur Dimensionsreduktion 1120 möglich.

So ist es möglich sämtliche nahe an einer Haltestelle 999 befindlichen Geopunkte 999 direkt auf die Haltestelle 999 abzubinden.

Zeiten 3060 können in Intervalle 4010 aufgeteilt werden. Beispielsweise kann eine Stunde in Intervallen 4010 von je 5 Minuten eingeteilt werden. Somit enthält man Einheiten wie 0 bis 5 Minuten, 5 bis 10 Minuten und so weiter. Alternativ kann man natürlich auch auf Stunden, 20 Minuten oder halbstündliche Intervallen 4010 runden.

Ein weiteres Beispiel für eine Fuzzifizierung 1120 kann es auch sein z.B. die Richtung des Fahrzeuges, Smartphones oder der Linie 500 zu entfernen.

In einem weiteren Schritt wird nun die Übereinstimmungsprüfung 1130 von zumindest zwei zuvorigen Fahrtschlüsseln 1030 durchgeführt. Dabei werden die verschiedenen granularitätsreduzierten Werte 1120 verwendet und es wird geprüft, ob alle Werte in Kombination zugleich übereinstimmen. Das Resultat 1210 der Übereinstimmungsprüfung 1130 ergibt somit eine Prüfung aufgrund fuzzifizierter Werte 1120, ob Fahrtschlüssel 1030 unscharfe Übereinstimmungen 1130 haben.

Folgende Werte und eine exemplarische Granularitäsreduktion 1120 auf 5 Nachkommastellen und Stunden dienen als Beispiel :

Fahrtzuordung 500/1110 A: 49.3011638,9.1467748 und 9:03 Uhr
-> Reduziert Granularitätsreduktion 1120 auf Fahrtschlüssel 1030 A: "49.30116,9.146774 - 9:00 Uhr" (FS-A 1030/3090)
Fahrtzuordung 1050/1110 B: 49.3011652,9.1467747 9:02 Uhr
-> Reduziert Granularitätsreduktion 1120 auf Fahrtschlüssel 1030 B: "49.30116,9.146774 - 9:00 Uhr" (FS-B 1030/3030/1170)
Da FS-A und FS-B somit auf gleiche Werte reduziert wurden, ergibt sich somit bei der Prüfung eine Übereinstimmung 1130.

Ein weiteres nicht Beispiel ist:
Fahrtzuordung 500/1110 1: 49.3011638,9.1467748 - 9:03 Uhr reduziert zu Fahrtschlüssel 1030:

"49.30116,9.146774 - 9:00" und
Fahrtzuordung 1050/1110 2: 49.3011652,9.1467747 - 7:01 Uhr reduziert zu Fahrtschlüssel 1030:.
"49.30116,9.146774 - 7:00"
Wie zu sehen ist, stimmen die Fahrtschlüssel 1030 nicht überein, da nicht alle granularitätsreduzierten Werte 1120 zugleich übereinstimmen.

Alternativ können in anderen Ausführungsformen der Erfindung 1200 natürlich auch andere Methoden zur Überprüfung von den größten Übereinstimmungen 1130 eingesetzt werden. Beispielsweise können Techniken wie Hierarchical Clustering und Entscheidungsbäume genutzt werden, um zu berechnen, welche Fahrtschlüssel 1030 die geringste Matching Distanzen haben.

Es ist zusätzlich zu erwähnen, dass unabhängig welche Technik benutzt wird, potenziell mehrere Übereinstimmungen 1210 auftreten können, wofür die verschiedenen Ausführungsformen der Erfindung 1200 im weiteren Verlauf ausgelegt sind.

In einem weiteren Schritt wird zumindest eine Entscheidung 1140 über Fahrtengleichheit getroffen. Hierbei werden die Ergebnisse 1210 von Übereinstimmungsprüfungen 1130 zuvor beachtet, um zu bestimmen, ob verschiedene Fahrten 500/1010/1050 die gleiche Fahrt 500, Linie 500 oder Route 500 repräsentieren. Eine oder mehrere Entscheidungen 1140 über Fahrtengleichheit 1140 werden dabei, aufgrund zumindest einer zuvor aufgedeckten Übereinstimmung 1130 getroffen.

Aufgrund dieser Entscheidung 1140 können dann fortfolgend z.B. Belegungsdaten einer Linie 500 oder einer speziellen Fahrt 500 zugeordnet werden.

Fig. 1b

Zeigt eine Ausführung der Erfindung 1200 als Apparat und dieser funktioniert wie folgt:

In einer Datenbank sind Fahrtschlüssel 1030 mitsamt zugehörigen Wegpunkten 999 und mit den Wegpunkten 999 assoziierten Zeiten 3060 und Fahrdaten 1050 hinterlegt. Ein Beispiel für eine solche Datenbank ist ein Fahrplan 1010, der in einer Datenbank gespeichert ist und abgefragt werden kann oder auch ein elektronisches Fahrplanauskunftssystem 500/1010 oder Teile dessen.

Bei einem Datenbankzugriff ist es auch möglich, dass eine Ausführung der Erfindung 1200 direkt granularitätsreduzierte Elemente 1210 enthält oder eine Datenbank direkt eine Schnittstelle enthält, die dynamisch granularitätsreduzierte Elemente 1210 Fahrten 500 zuordnet.

Alternative Fahrtdaten 1050 entsprechen einer zweiten Datenquelle. Beispielsweise ein Belegungszählsensorsystem oder ein Passagier Smartphone. Diese konkreten Fahrtdaten 1050 enthalten dabei Wegpunkte 999 und eine Uhrzeit/Datum 3060 und werden an einen fuzzifizirenden Übereinstimmungsprüfer 1200/1130 übermittelt. Selbstverständlich können die Daten 1050 auch nicht nur übermittelt" sondern auch abgerufen werden, je nach vorteilhaftem Einsatzzweck der Erfindung 1200.

Der fuzzifizirende Übereinstimmungsprüfer 1200/1130 prüft die Übereinstimmung 1130 von unscharfen Zuordnungen 1110 (siehe auch 1130 im Verfahren). Hierzu können z.B. fuzzifizierte Werte aus der Wegpunkt-Zeit- Fahrtschlüssel 1030/3090 Datenbank 1010 mit Werten aus den alternativen Fahrtdaten 1050 und deren Fahrtschlüssel 1030/3030 verglichen werden.

Es ist dabei erwähnenswert, dass Ausführungsformen der Erfindung 1200 direkt Granularitätsreduktionen 1120 durch Abfragen der Fahrtdatenbank 1010 durchführen können. Durch den fuzzifizierenden Übereinstimmungsprüfer 1200 können somit direkt Übereinstimmungen 1130 geprüft werden. Übereinstimmungen 1210 und ggf. auch nicht Übereinstimmungen 1210 werden dabei in einem Übereinstimmungsdokument 1210 gesammelt.

Der fuzzifizierende Übereinstimmungsprüfer 1200 nutzt fortfolgend die im Übereinstimmungsdokument 1210 gelisteten Übereinstimmungen 1210 und bewertet diese (siehe auch 1140). Diese Bewertung ist notwendig, um z.B. bei mehreren Übereinstimmungen eine Entscheidung 1140 zu fällen, bei der die stärkste Übereinstimmung 1210 vorliegt. Um eine solche Entscheidung 1140 zu treffen, können z.B. Regeln und/oder statistische Datenstrukturen, wie z.B. Histogramme (siehe auch 3130) verwendet werden. Aufgrund einer oder keiner Übereinstimmungsentscheidung 1210/1140 kann fortfolgend ein Dokument über die Zuordnung 1110 von konkreten Fahrten 500 ausgegeben werden.

Bevorzugte Ausführungsformen der Erfindung 1200 können auch direkt granularitätsreduzierte Werte 1170/1030/3030 in der Wegpunkt-Zeit- Fahrtschlüssel Datenbank 999/3060/1030/1010 speichern. Dies kann z.B. geschehen, indem z.B. der fuzzifizirende Übereinstimmungsprüfer 1200 oder eine andere Komponente Granularitätsreduzierungen 1200 von ganzen Fahrplänen 1010 durchführt und diese speichert. In einer solchen Ausführungsform kann z.B. ein Übereinstimmungsdokument 1130 dann sehr leicht durch Abfragen der Datenbank mit granularitätsreduzierten konkreten Fahrdaten 1050 erzeugt werden, indem granularitätsreduzierte Werte 1120/3030 in Abfragebedingungen (z.B. where conditions) verwendet werden.

Fig. 1c

zeigt eine Ausführungsform der Erfindung 1200, die konkrete Fahrten 500 einem Fahrplan 1010 zuordnet. Wie in vorherigen Ausführungsformen wird der Soll Fahrplan 1010/1070/3060 (Wegpunkt-Zeit- Fahrtschlüssel 1030 und Fahrten 500) in der Granularität 1120 reduziert, wodurch konkrete Geopostion-Zeitschlüssel generiert werden.

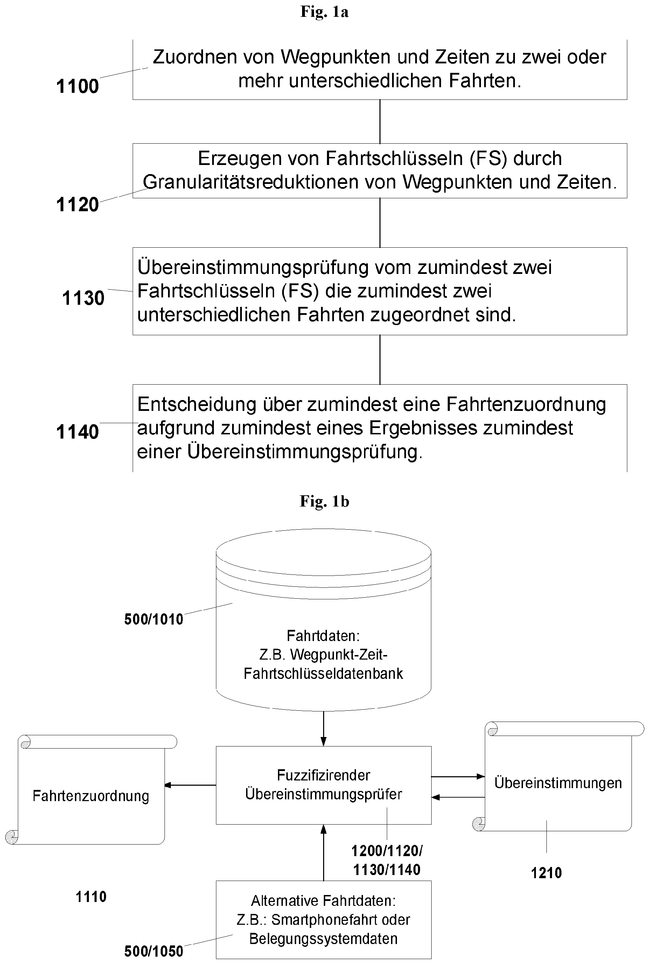

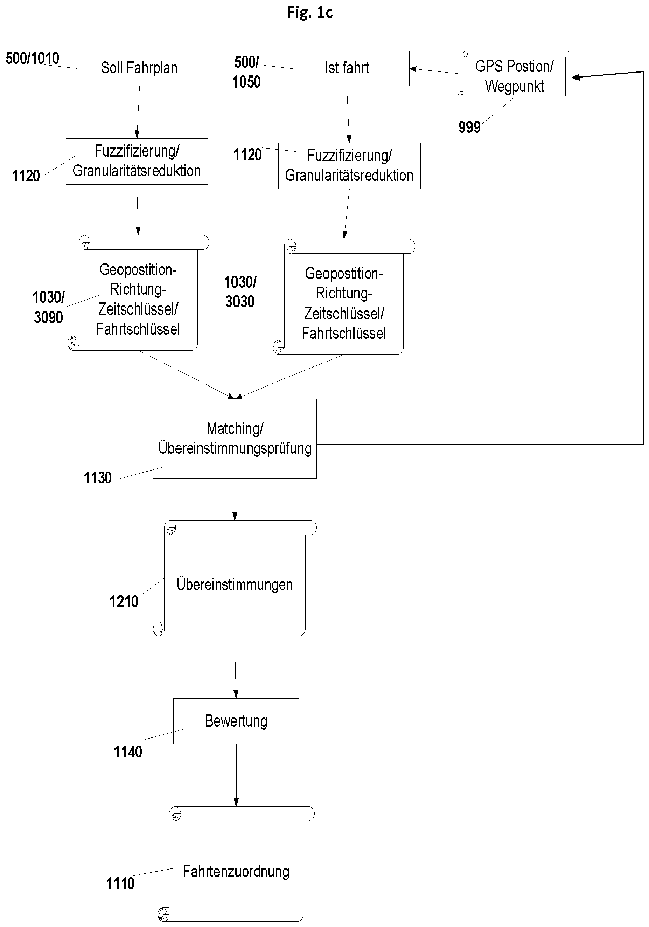

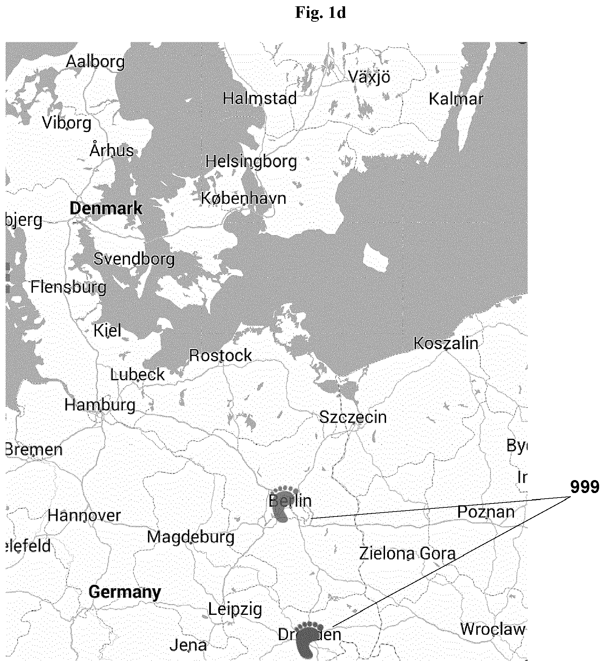

Um anzuzeigen aus welchen Werten aus Fig.1b Werte in Fig. 1c erzeugt werden können ist ein Zeilenindex 10 gegeben, der anzeigt welche Zeilen in Fig. 1b in Fig. 1c resultieren.

Ein einfaches Beispiel für eine Reduktion:

49.3011638,9.1467748 - 9:03 UHR - Richtung 1
kann reduziert werden zu Geopostion-Zeitschlüsse1: 49.30116,9.146774 9:00 Uhr.

Sämtliche Einträge in einem Fahrplan 1010 mitsamt Linienverläufen 500 und deren Wegpunkten 999 können auf diese Weise codiert werden. Für jede Linie 500 kann man sich hier eine Fahrt A' vorstellen. Man kann also Wegpunkte 999 einer Fahrt 500 nutzen, um über Granularitätsreduktionen 1120 eine Mehrzahl von Fahrtschlüsseln 1030 je A' 3090 zu erzeugen.

Hierbei stelle man sich ein Smartphone oder eine Belegungszählsystem vor, bei welchem rein GPS Daten 999 bekannt sind, was als Ist-Fahrt 1050 bezeichnet wird. Kontinuierlich ändert sich hier die GPS Position 999 und auch die zugehörige Zeit 3060. Somit können mehrere Fahrtschlüssel B 3030 berechnet werden. Diese Einträge werden nun fuzzifiziert 1120 und auch hier werden verschiedene Fahrtschlüssel B 1030 generiert.

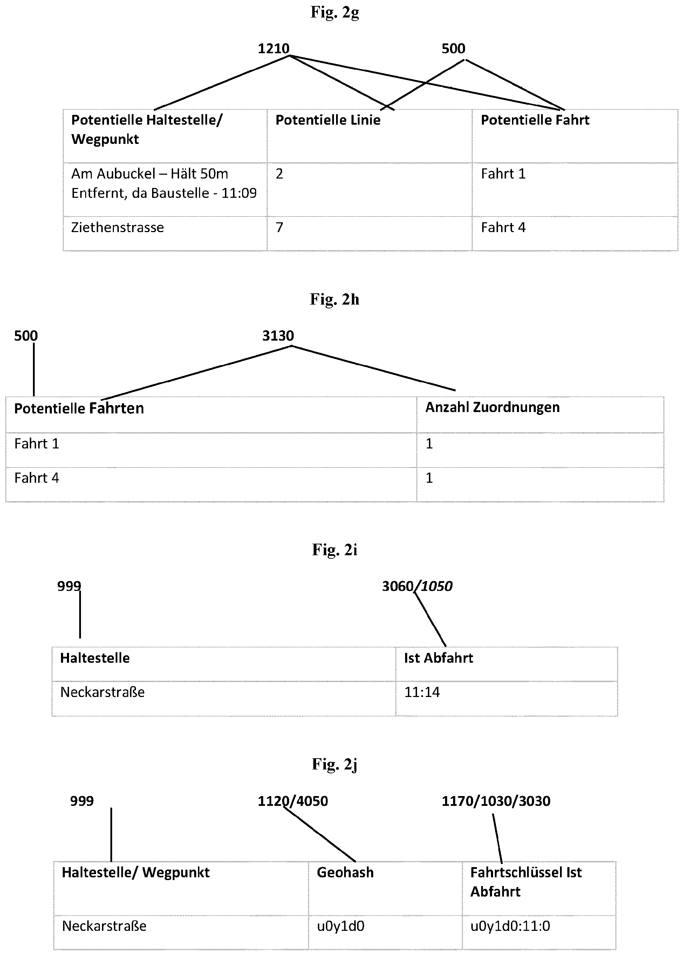

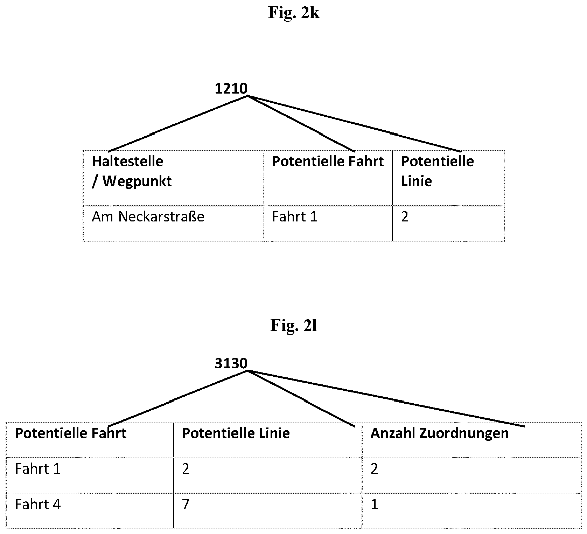

Nun werden Übereinstimmungen 1130 zwischen Fahrtschlüssel B 1030/3030/1170 und Fahrtschlüssel A1030' von Fahrten A 1170/1030/3090 bestimmt und in einem neuen Dokument 1130/1210/3130 aufgeführt. In einem solchen Dokument 1210 ist nun z.B. der folgende Inhalt vorhanden (siehe auch ein Beispiel in Fig. 2h und 2l):

Mehrere Fahrtschlüssel von Fahrt B: Linie 5 (Fahrt A'): 4 Übereinstimmungen
Mehrere Fahrtschlüssel von Fahrt B: Linie 3 (Fahrt A"): 1 Übereinstimmungen
Mehrere Fahrtschlüssel von Fahrt B: Linie 30 (Fahrt A‴): 3 Übereinstimmungen

Um eine Mehrzahl der potentiellen Zuordnungen zu bewerten, werden nun die Übereinstimmungen 1130 durch zumindest eine Regel bewertet 1140, wie z.B., dass Fahrt A' mit den meisten Übereinstimmungen letztendlich die Fahrtenzuordnung 1110 als Dokument 1210 auszugeben ist. Beim obigen Beispiel wäre somit das Resultat der Erfindung 1200 Fahrtschlüssel: Linie 5.

Fig. 1d

Zeigt ein exemplarisches Beispiel von Geodaten 999 oder einem Standortverlauf 999 eines Smartphones, wie er als Wegpunkte 999 in der Erfindung 1200 verwendet werden kann. Wie zu sehen ist kann eine oder mehrere Geopositionen 999 dazu verwendet werden um Haltestellen 999 oder jedwede andere Geopositionen 999 eines Fahrzeuges im ÖPNV darzustellen.

Fig. 2a-1

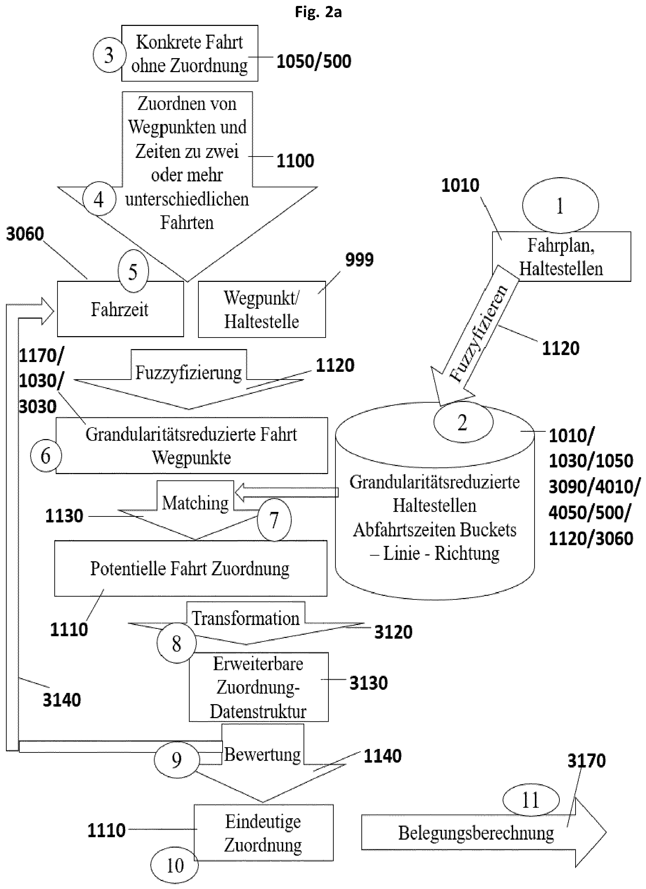

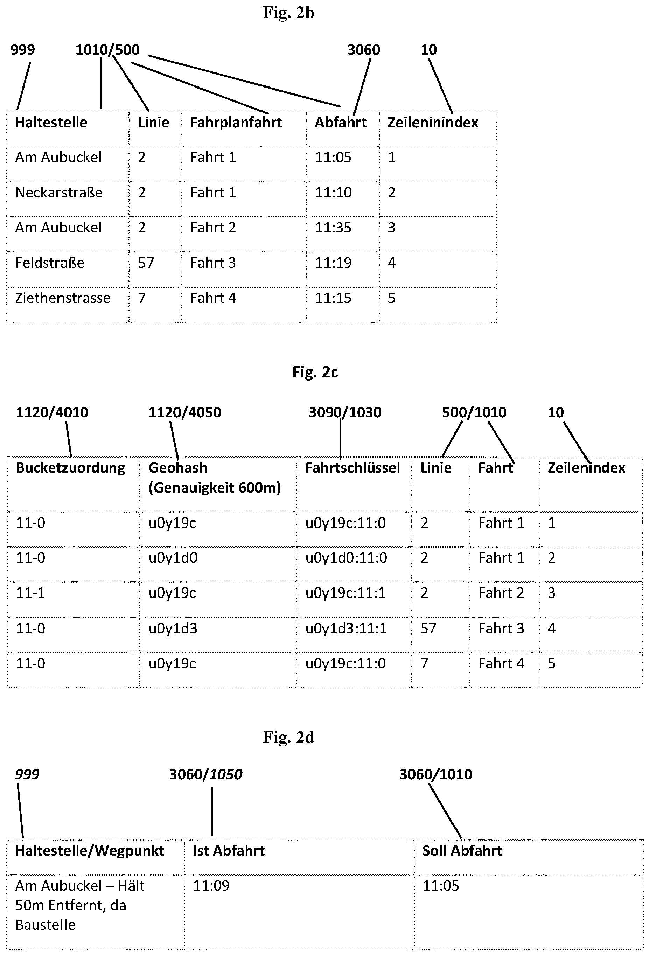

Zeigt in Kombination eine Ausführungsform der Erfindung 1200 am konkreten Beispiel. Fig. 2a zeigt dabei die generelle Vorgehensweise und erklärende Daten und Datenstrukturbeispiele, die die Fig. 2a ergänzen und finden sich dann in Fig. 2b-2l.
In Fig. 2a finden sich zudem Zahlen in Kreisen, die die Lesbarkeit und das Verständnis der Zeichnung erhöhen indem im fortfolgenden Text in Reihenfolge der Zahlen die Funktionsweise beschrieben wird.

1010 - Nummer 1

Fig. 2b zeigt einen beispielhaften Abfahrtsfahrplan 1010.
Zuerst werden aus dem Fahrplan 1010 Haltestellen-Linien-Zuordnungen 999/500/1110 erzeugt und die Abfahrtszeiten 3060 werden durch Haltestellen 999 "verunschärft"/fuzzifiziert/granularitätsreduziert 1120 in einer Datenbank 3090 abgelegt. Somit kann eine solche Datenbank 3090 z.B. eine Ansammlung von Zuordnungen 1110 von mehreren Fahrten A 500/1010 zu zugehörigen Fahrtschlüsseln 1030/3090 darstellen. Alternativ zu der der Reduktion 1120 auf Haltestellen kann natürlich auch eine Reduktion 1120 mit granularitätzreduzierten Wegpunkten 999 einer Linie oder Fahrt 500/1010 erfolgen. Beispielsweise können Verfahren zur Geogranularitätsreduktion, wie Geohashes 4050 oder andere Geoindexe, wie z.B. H3 https://github.com/uber/h3 verwendet werden, um Geobereiche 999 hierarchischen Waben mit auf-/bzw. absteigender Granularität zuzuordnen.
Alternativ zu Waben können auch Geohashes 4050 es ermöglichen, Bereiche als eine kurze Folge von Buchstaben und zu Ziffern, zu codieren. Geohashes 4050 bieten die Möglichkeit Zeichen schrittweise vom Ende des Codes zu entfernen, um dessen Größe zu verringern (und die Genauigkeit allmählich zu verlieren). Siehe auch: https://wiki.edu.vn/wiki28/2021/05/28/geohash-wikipedia/.
Auch kann ein Geoindex/Geohash 4050 mit konkreten Haltestellen 999 kombiniert werden, um z.B. einen
Geohash 4050 oder einem Geoindex oder einer Mercator Projektion in einer Zoom/bzw. Granularitätsstufe eine Haltestelle 999 zuzuordnen oder anstatt der Haltestelle 999 immer deren Geoindex/Geohash 4050 zu verwenden. Dies ermöglicht beispielsweise, dass Haltestellenpositionen 999 stets noch erkannt werden, auch wenn diese um ein paar Meter durch Baustellen verlegt wurden. Zusätzlich können natürlich zuerst Namen der Haltestellen 999 anstatt konkrete GPS Positionen 999 verwendet werden. Ein reiner Geoindex ist dann der Fallback. Wir zeigen jedoch im Folgenden die Anwendung mit einem Geoindex 4050, da das Verfahren mit reinen Haltestellennamen 999 äquivalent funktioniert und das geoindexbasierte Verfahren Zuordnungen 1110 auch ohne Haltestellennamen 999 ermöglicht.
1120
Eine zeitbasierte Fuzzifizierung 4010 erfolgt dabei z.B. anhand des Linientaktes. Wenn beispielsweise alle 30 Minuten ein Bus einer Linie 500 abfährt, bieten sich 20 Minuten Blöcke an (mit 10 Minuten Puffer um verfrühte nachfolgende Busse auszuschließen). Eine Stunde würde dann in sechs 10 Minuten Blöcke aufgeteilt.

"Bucket 0" - 0-9 Minuten
"Bucket 1" - 10-19 Minuten
"Bucket 2" - 20-29 Minute
"Bucket 3" - 30-39 Minuten
"Bucket 4" - 40-49 Minuten
"Bucket 5" - 50-59 Minute

Fig 2c zeigt dazu ein Beispiel für eine Blockzuordnung 4010 (oder auch Bucketzuordnung genannt) durch eine Granularitätsreduktion 1120. Wie zu sehen ist, wurde bei der Bucketzuordnung 4010 die Linie 500 entfernt, aber durch die Buckets 4010 ist eine somit eine Assoziation mit der Linie 500, Richtung, Fahrt 500 und anderen Fahrtschlüsseln 1030 gegeben.
Weiterhin zeigt Fig. 2c wie Geohashes/Geoindexe 4050 verwendet werden können, um z.B. Haltestellen aus Fig. 2b oder andere Wegpunkte 999 in diese zu überführen, um einen Fahrtschlüssel 1030 zu erzeugen, der Linien 500 oder anderen Fahrtbezeichnern, zugeordnet ist.

1120/1030/1050/3090/4010/4050/500/1120/3060 - Nummer 2

Die Fahrtschlüssel 1030 und die zugehörigen Fahrplandaten 1010 können wie gezeigt in einer Datenbank oder anderen Dokumenten oder einer Datenstruktur abgelegt werden. Der Datenbankinhalt kann dann z.B. ein Fahrplan 1010 kombiniert in Fig. 2c darstellen.

In einer besonders optionalen Ausführung können die Zeitblöcke 4010, Granularitätsreduktionen 1120 von Zeit und Geobereich 999 und die zugehörige Fahrtschlüsselgenerierung 1120 auch direkt dynamisch durch eine Schnittstelle aus einem Fahrplan 1010 erzeugt werden, um Speicherplatz zu sparen. Eine solche Ausführungsform kann natürlich auch z.B. für Zeitintervalle (wie z.B. Tage) 4010 erzeugt werden, um z.B. nur einen speziellen Tag abzubilden. Dies ermöglicht es dann besonders vorteilhaft speichersparend solche Zeiträume wie Tage zu verarbeiten ohne die Notwendigkeit alle Fahrtschlüssel 1030/3090 immer vorhalten zu müssen.

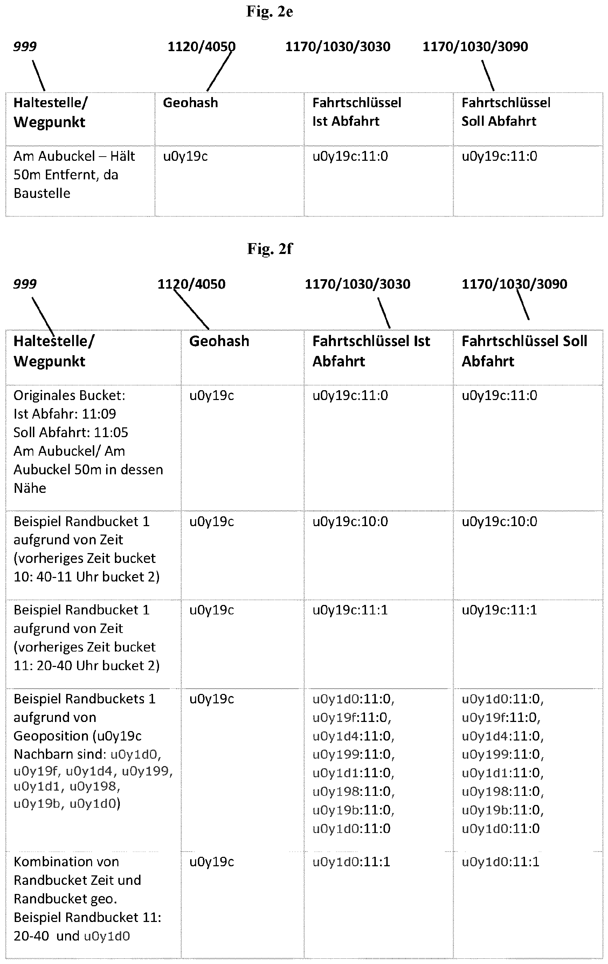

Es ist zudem noch erwähnenswert, dass besondere Ausführungsformen der Erfindung 1200 auch Nachbarblöcke/Nachbarbuckets erzeugen können. Dieses Vorgehen ist in Fig. 2f gezeigt und verhält sich analog zum zuvor beschriebenen. Es werden zur Nachbarblockerzeugung angrenzende Geobereiche 999 und angrenzende Zeitblöcke 4010 verwendet und daraus werden die daraus abgeleiteten Fahrtschlüssel 1170/1030/3090 auch Fahrten 500 A oder B zugeordnet.

1050/500 - Nummer 3

Fortfolgend wird die Datenbasis von zuvor benutzt, um konkrete Fahrtdaten/Fahrten 1050 (Fahrten B) darauf abzubilden und somit dem Fahrplan 1010 (Fahrten A) zuzuordnen.

1100 - Nummer 4

Für 1050 ist sich eine Fahrt 500 vorzustellen, deren Zuordnung zum Fahrplan 1010 unbekannt ist. Beispielsweise kann dies ein Smartphone eines Passagiers oder auch ein Zählsystem oder ein anderes technischen Geräts sein, das dem Fahrplan 1010 zugeordnet werden soll.

Für den Abgleichsprozess wird zuerst festgestellt, ob Daten über die Verspätung im Fahrplan 1010 oder bei der konkreten Fahrt 1050 vorliegen. Sofern Verspätungsinformationen vorliegen ist, werden die Ist-Daten 1050 in den weiteren verwendet, ansonsten die Soll-Daten 3060. Die Behandlung von Soll- und Ist-Daten ist dabei äquivalent.

Besonders bevorzugte Ausführungsformen der Erfindung 1200 können Soll- und Ist-Daten auch mischen, indem z.B. im Fahrplan 1010 nur Soll-Daten 3060 aus dem Fahrplan und Ist-Daten 1050 aus einer konkreten Fahrt 1050 verwendet werden oder umgekehrt, da die Erfindung 1200 besonders dafür ausgelegt ist, trotz unpräziser Daten, Zuordnungen 1110 durchführen zu können.

3060/999 - Nummer 5

Ein Beispiel für Abfahrtsdaten 3060 für eine Fahrt B 1050 mit unbekannter Zuordnung 1110 ist in Fig. 2e gegeben: Am Aubuckel fährt ein Bus mit 4 Minuten Verspätung um 11:09 ab. Jedoch hält der Bus 50 Meter von der Haltestelle 999 entfernt, da eine Baustelle an der Haltestelle 999 ist.

1120

Durch Grandularitätsreduktionsverfahren/Fuzzifizierung 1120 wird die Fahrt 1050 unbekannter Zuordnung 1110 durch Fahrtschlüssel 1030 gekennzeichnet.

1170/1030/3030 - Nummer 6

Aufgrund der vorherigen Fahrtschlüsselgenerierung 1120 können, aus Soll- und Ist-Abfahrtszeiten aus Fig. 2d, Zuordnungen 1110 wie in Fig. 2e berechnet werden. Wie zu sehen ist, verwandelt die Erfindung 1200 besonders vorteilhaft Verspätungen und Soll-Zeiten 3060 durch die Block-Zuordnung 1110/4010 in äquivalente Werte (siehe Block 11:0). Weiterhin ist auch der Geohash 4050 mit einer Genauigkeit/Unschärfe von 600 Metern zu sehen.

Fig. 2f

Es ist hierbei zu erwähnen, dass besondere Ausführungsformen der Erfindung 1200 auch "Randblöcke" und zugehörige Fingerprints für konkrete Fahrten 500/1050/1010 und die Datenbank 3090 berechnen können. Fig. 2f zeigt solche Randblöcke. Dabei werden z.B. die zeitlichen Nachbarblöcke bestimmt und/oder auch in Kombination die geographischen Nachbarblöcke. Natürlich müssen nicht zwangsweise alle Nachbarblöcke bestimmt werden. Eine Ausführungsform kann dabei durch Regeln spezifizieren, welche Nachbarblöcke einzeln oder in Kombination mit Fahrtschlüsseln 1030 bestimmt und genutzt werden. Generell haben Nachbarblöcke Vorteile (bessere Beachtung von Streckenanpassungen, Verspätungen und Verfrühungen) und Nachteile (oftmals langsamere Bestimmung der Linie 500 durch mehr benötigte Wegpunkte 999). Mit oder ohne Nachbarblöcke bleibt die generelle Funktionsweise der Erfindung 1200 jedoch gleich, da die Erfindung 1200 genau für den Zweck ausgelegt ist multiple unscharfe Zuordnungen 1110 in scharfe Zuordnungen 1110 zu transformieren. Aus diesem Grund wird im weiteren Verlauf aus Vereinfachungsgründen hauptsächlich auf Sachverhalte ohne Nachbarblöcke eingegangen, da die weitere Funktionsweise der Erfindung 1200 die selbige ist.

1130 - Nummer 7

Die Fahrtschlüssel 1030 in der Datenbank 3090 (Fig. 2c oder mit Randblöcken Fig.2f) werden mit den Fahrtschlüsseln 1030/3090 der tatsächlichen Abfahrten Fig. 2e vergleichen. Hierdurch erhält man nun durch Fig. 2c und Fig. 2e das Resultat 1210 in Fig. 2g. Wie zu sehen ist, können hierbei mehrere potentielle Fahrten 500 und Linien 500 durch die Unschärfe potentiell übereinstimmend sein.

3120/3130 - Nummer 8

Das Resultat 1210 wird durch eine Transformation 3120 in eine Datenstruktur 3130 umgewandelt, um zu vergleichen, ob spezielle Fahrten passender zugeordnet werden können als andere, was in Fig. 2h dargestellt ist. Diese Datenstruktur 3130 kann z.B. als Eingabe für statistische und machine learning methoden, wie z.B. hierarchical clustering dienen.

Fig. 2h zeigt dabei ein solches Ergebnis 1210 einer Transformation 3120 in einer erweiterbaren statistischen Datenstruktur 3130 in Form eines Histogramms 3130. Hierbei ist eine Frequenz zu sehen, welche Fahrten 1010 (Fahrten A) wie oft zu zugeordneten Fahrten 1050 (Fahrt B) wurden.

Diese Transformation 3120 in eine solche analytische Datenstruktur 3130 bei Fig. 2h zeichnet sich daher z.B. dadurch aus, dass die Datenstruktur 3130 durch weitere potentielle Zuordnungen 1110 erweiterbar ist. In einem einfachen Fall kann z.B. in einer solchen Datenstruktur 3130 die Anzahl der Zuordnungen 1110 gezählt und somit die Zuordnungsfrequenz zu Fahrten 1010 (Linie, Fahrzeug oder andere Fahrten) erfasst werden. Durch diese Eigenschaften ist eine solche Datenstruktur 3130 über mehrere Zyklen erweiterbar und kann aggregiert werden, indem z.B. somit mehrere gleiche zugeordnete potentielle Fahrtzugehörigkeiten 1030 als Zuordnungsfrequenz aufsummiert werden können.

In besonders vorteilhaften Ausführungen können in eine solche statistische Datenstruktur 3130 nicht nur Übereinstimmungen 1130 aufgenommen werden. Alternativ oder zusätzlich dazu können konkrete Distanzen (wie z.B. durch Hamming Distanzen wie in der kurzen Beschreibung der Erfindung 1200 beschrieben) zwischen Fahrtschlüsseln 1030 bestimmt werden, um noch bessere Zuordnungsvergleiche 1140 zu ermöglichen.

1140 und 3140 - Nummer 9

Auf die statistische Datenstruktur 3130 werden Regeln angewendet, um die potentielle Zuordnungen 1110 zu vergleichen. Solchen Regeln können einfache Vergleiche der Zuordnungen 1140 sein, aber auch die Ausführung von Methoden, um die Distanz zu verschiedenen Fahrtschlüsseln 1030 zu vergleichen.

Eine einfache Regel kann auch z.B. sein, dass im Histogramm 3130 eine Fahrtzuordnung 1110 mindestens "1" (oder mehr) erfolgreiche Zuordnungen 1110 mehr als andere Fahrten hat. Sofern dies der Fall ist können Regeln fortfolgend dann die Ausgabe in 1110 liefern. Im Beispiel mit Fig. 2h ist durch diese Regel die Zuordnung 1110 nicht möglich, weshalb die Daten der nächsten Haltestelle 999 dann durch erneutes Durchführen (3140) der vorherigen Schritte verarbeitet werden.

3140

3140 zeigt aufgrund der nicht Entscheidbarkeit zumindest einer Fahrtenzuordnung 1110 ein mehrmaliges Durchführen vom Verarbeiten von neuen Wegpunkten 999.

Ein Beispiel für einen neuen Wegpunkt 999 ist in Fig. 2i gegeben. Hier ist eine Abfahrt 3060/1050 um 11:14 Uhr. Diese kann nun in Fahrtschlüssel 1030 überführt werden, wie in Fig. 2j gezeigt. Wenn dieser Fahrtschlüssel 1030 0y1d0:11:0 nun mit der Datenbank 3090 aus Fig. 2c verglichen wird, so wird daraus die Zuordnung 1110 aus Fig. 2k ableitbar.

Durch Fig. 2k kann nun die statistische Datenstruktur 3130, am Beispiel des Histogramms 3130 in Fig. 2h erweitert werden, so dass sich daraus Fig.2l ergibt.

Durch Fig.2l kann nun die zuvor beschriebene Beispielregel (Fahrtzuordnung 1110 erfordert, dass mindestens "1" (oder mehr) erfolgreiche Zuordnungen 1110 mehr als andere Fahrtzuordnungen zu einer Fahrt existieren) erfüllt werden, da Fahrt 1 in Fig. 2l über 1 erfolgreiche Mehrzuordnung verfügt.

Selbstverständlich kann dieser Prozess aus 3140 mehrmals durchgeführt werden, um besonders stabile Zuordnungen 1110 zu erhalten. Hierbei können besonders vorteilhafte Ausführungsformen der Erfindung 1200 in 1140 besonders vorteilhafte Bewertungsverfahren einsetzen. Weiterhin können bei mehreren Iterationen auch die besonders vorteilhaften Randblöcke (siehe Fig.2f) genutzt werden, um Dynamiken im Fahrplan 1010 anzufangen und besonders treffsichere Zuordnungen 1010zu erzielen. Ein weiterer Grund hierfür ist, dass sich Fahrpläne 1010 oftmals leicht ändern. Beispielsweise kann es sein, dass eine Haltestelle 999 (oder auch Streckenwegpunkt 999) in einem neuen Fahrplan 1010 nicht mehr existiert oder neue Haltestellen 999 (oder auch Streckenwegpunkte 999) eingefügt wurden. Auch könnte es sein, dass Baustellen dazu führen, dass eine Haltestelle 999 kurzzeitig umbenannt und an einer anderen Geoposition 999 zu finden ist. Durch Randblöcke (siehe Fig. 2f) und mehrmalige Iterationen und durch 3140 können diese Fälle besonders vorteilhaft beachtet werden.

1110 - Nummer 10

Durch ein- oder mehrmaliges Zuordnen ist nun eine oder mehrere stabile Zuordnungen zwischen zwei oder mehr verschiedenen Fahrten möglich. Somit wird dann z.B. eine Smartphone GPS Koordinaten Fahrt einer Fahrplan Fahrt zugeordnet.

3170 - Nummer 11

Nach der Zuordnung von Fahrt 1050 zu Linie 1010 (und somit einer oder mehrerer Fahrten B zu einer von mehreren Fahrten A) können somit z.B. besonders leicht Zählsysteme als 1050 Fahrten einer Linie 500 zugeordnet werden. Es gibt hierbei zu beachten, dass die Erfindung 1200 hierfür über spezielle Erweiterungen verfügen kann und z.B. bei der einer erkannten Fahrt 1050/1110 können besonders vorteilhaft Haltestellen 999 aus dem Fahrplan 1010 und Ereignisse (z.B. Sensorereignisse wie Einsteiger oder Aussteiger) den Fahrtdaten B zugeordnet werden. Beispielsweise können durch erkannte Fahrten 1050/1110 besonders gut konkrete Attribute wie Endhaltestelle 999 und ähnliches zugeordnet werden, was für eine nachfolgende Belegungsberechnung besonders vorteilhaft ist. Mit Hilfe dieser Attribute können fortfolgend Belegungen, aufgrund von Einsteigern und Aussteigern, besonders genau berechnet werden.
Man beachte, dass weitere Ausführungsformen der Erfindung 1200 noch über zusätzliche Erweiterungen verfügen können, um etwaige Zuordnungsprobleme bei

- starken Verspätungen,

- bei sich stark überlagernden Linien 500 (viele gemeinsame Wegpunkte 999 verschiedener Linien 500),

- und Linientransformationen (Linie 7 wird ab Haltestelle X Linie 5)

zu lösen.
Daher können Ausführungsformen der Erfindung 1200 über die folgenden Erweiterungen für Zuordungsvergleiche/Bewertungen 1140 und Datenstrukturen 3130 verfügen:

- Erweiterung für Zuordungsvergleiche in 1210 oder 1140 durch Mehrheitsvotum über mehrere Wegpunkte 999: Oftmals werden nicht alle Wegpunkte 999 einer Fahrt 1050 B erkannt. Daher können vorherige und spätere Wegpunkte 999 verwendet werden, um bei nicht zugeordneten Wegpunkten 999 eine oder mehrere (potentielle) Zuordnungen 1110 oder Übereinstimmungen 1210 zu einer oder mehreren Fahrten A zuzuordnen.

- Erweiterung für das Fortschreiben von Zuordnungen 1110 oder Übereinstimmungen 1130.

  Sobald für eine Fahrt B eine oder mehrere Zuordnungen 1110 oder Übereinstimmungen 1130 für einen Wegpunkt 999 oder eine Mehrzahl derer verfügbar sind, können diese Zuordnungen 1110 oder Übereinstimmungen 1130 für weitere fortfolgende Wegpunkte 999 der Fahrt B bis zum Greifen einer neuen Regel als Zuordnung 1110 für neue Wegpunkte 999 verwendet werden.

- Erweiterung für exkludierende Zuordnungen 1110 oder Übereinstimmungen 1130.
  Diese Regel ist besonders vorteilhaft einsetzbar, um als Abbruchkriterium für die Regel für das Fortschreiben von Zuordnungen 1110 oder Übereinstimmungen 1130 zu dienen. Beispielsweise werden Linien 500/1010 beendet und ein Fahrzeug (und somit eine Fahrt B) fährt ab einer Haltestelle 999 unter einer neuen Linie 500/1010 (neue Fahrt A') weiter. Eine Regel kann solche Linientransformationen beachten, indem z.B. alle Datenpunkte in einer Datenstruktur 3130, wie z.B. meinem Histogramm, auf 0 zurückgesetzt werden, wenn eine vorherige Zuordnung 1110 oder Übereinstimmung 1130 für einen neuen Wegpunkt 999 nicht mehr passend ist. Zusätzlich kann eine solche Regel besagen, dass jede Linie 500/1010 (Fahrt A), die zuvor schon (Fahrt B) zugeordnet wurde und bei einem oder mehreren weiteren neuen Zuordnungszyklen 3140 nicht mehr als potentielle Zuordnung 1110 oder Übereinstimmung 1210 für Fahrt B dient. Diese Regel kann weiterhin besagen, dass Fahrt B ab einem Wegpunkt 999 einer neuen Fahrt A zugeordnet werden muss.

- Erweiterung zur Nutzung von Richtungen als Filterkriterium.
  Spezielle Zuordnungsregeln 1110 oder Fahrtschlüssel 1030 mit Richtungsangaben können die Fahrtrichtung und die Richtung in Fahrplandaten 1050 (Fahrten A) und einer Fahrt B beachten, um besonders vorteilhaft und schnell potentielle Zuordnungen 1110 abzuleiten. Beispielsweise können somit alle Linien 500/1010 aus Fahrt A ausgeschlossen werden, die sich in die gegenteilige Fahrtrichtung von Fahrt B bewegen.

- Weiterhin sind natürlich noch weitere besonders vorteilhafte Regeln möglich, indem es die Erfindung 1200 ermöglicht jedweden Programmcode als Erweiterung zu realisieren.

Wie gezeigt, verhalten sich Verfahren analog zu der Realisierung der Erfindung 1200 als Apparat. Aus diesem Grund können selbstverständlich alle Merkmale der Erfindung 1200 in eines oder mehrere Verfahren umgewandelt werden und umgekehrt. Daher sind die in dieser Anmeldung beschriebenen Merkmale der Erfindung 1200 auch als Merkmale eines oder mehrerer Verfahren zu sehen und Merkmale von Verfahren können auch Merkmale von Apparaten sein.

Zuletzt wurde die Erfindung im Speziellen für den Bereich Öffentlicher Personennahverkehr gemacht, aber diese kann auch besonders vorteilhaft in anderen Bereichen eingesetzt werden.

Beispielsweise können durch die Erfindung auch Flüge anderen Flugdaten zugeordnet werden, wobei dann die Flugkoordinaten mit Fahrt B und die Flugdaten mit den Fahrten A gleichzusetzen sind. Flugdaten können dabei historische Daten mit Flug-Zeit-Koordinaten, nahe Echtzeit Flugdaten oder auch Daten aus Flugplänen sein. Somit ist es Beispielsweise möglich, dass ein Passagier durch GPS Positionen automatisch seinen Flug oder auch seine Schiffsroute dem Flugplan oder Schiffsrouten zugeordnet bekommt..

Generalisiert gesehen ist es durch die Erfindung 1200 in jedem Bereich möglich Ansammlungen von Wegpunkten 999 (Fahrt B 500/1050) somit Fahrten 500/1010 (Fahrt A), wie z.B. Linien, zuzuordnen. Eine aktuelle Bewegung eines Wegpunkt 999 aufzeichnenden Gerätes, wie z.B. ein Smartphones, entspricht somit einer oder mehrerer Fahrten B 500/1050. Man kann sich nun vorstellen, dass Zielorte eines Nutzers des Wegpunkt 999 aufzeichnenden Gerätes bekannt sind und jeder Weg zu einem Ziel entspricht einer oder mehreren Fahrten A 500/1010. Z.B. kann bekannt sein, an welchem Ort der Smartphonebesitzer arbeitet oder sein Zuhause hat, wohin er regelmäßig fliegt, schwimmen geht der Ähnliches. Es ergibt sich somit z.B.:

- Fahrt vom aktuellen Wegpunkt 999 zur Arbeit = Fahrt A'
- Fahrt vom aktuellen Wegpunkt 999 nach Hause = Fahrt A"
- Fahrt vom aktuellen Wegpunkt 999 zum Flughafen= Fahrt A‴
- Fahrt vom aktuellen Wegpunkt 999 zum nächsten Schwimmbad= Fahrt A""
- Kontinuierliche Aufzeichnung von neuen Wegpunkten = Fahrt B.

Ebenfalls könnte hierfür die Historie der letzten Websuchen oder Auswahl von Interessenspunkten in einer Kartenapp verwendet werden, um potentielle Zielorte von weitere Fahrten A zu bestimmen. Aus den potentiellen Zielorten können dann Routen mit Zielen bestimmt werden, wie z.B. aus einem Navigationssystem oder aus historischen Wegaufzeichnungen, die dann als Fahrten A zum Vergleich mit der weiteren Fortbewegung (Fahrt B) dienen. Beispielsweise können vom letzten aufgenommenen Wegpunkte 999 bestimmt werden wie z.B.:

- Route Fahrt A""" zum Stammrestaurant

- Route Fahrt A"""" zu den letzten geklickten Markierungen einer Karten Applikation

- Route Fahrt A""""' zum zu Adressen der letzten Websuchen

Die Erfindung kann nun Wegpunkte 999, die aufgezeichnet werden als Fahrt B nutzen, um die Ähnlichkeit zu den verschiedenen Routen/Fahrten A zu berechnen. Sobald bei der Bewertung 1140 eine vermutliche Route festgestellt werden kann ist es möglich einem Nutzer eine Meldung anzuzeigen oder die Zuordnung 1110 zu speichern. Eine solche Meldung kann visuell oder auch per Tonausgabe/Eingabe z.B. sein den Nutzer über potentielle Verkehrsbehinderungen zum potentiellen Ziel zu informieren oder auch nur, um bei diesem nachzufragen, ob er vorhat zu dem vermuteten Zielort zu fahren.

**Patentansprüche**

1. Eine Erfindung als System oder Anordnungen (1200) zum Zuordnen von Fahrdaten, wobei ein System oder eine Anordnung zumindest folgende Merkmale aufweisen:

   a. Zumindest einmaliges Erzeugen zumindest eines Fahrtschlüssels (1030) FS-A von zumindest einer Fahrt (500) A;
   b. Zumindest einmaliges Erzeugen zumindest eines weiteren Fahrtschlüssels (1030) FS-B von zumindest einer weiteren Fahrt (500) B;
   c. Zumindest ein oder mehrere Fahrtschlüssel (1030) unter dem Nutzen von Wegpunkten 999 und damit assoziierten Zeitdaten (3060) erzeugt werden;
   d. Zumindest eine Übereinstimmungsprüfung (1130) von zumindest einem FS-A und zumindest einem FS-B;
   e. Zumindest eine Entscheidung über zumindest eine Zuordnung (1110) von zumindest einer Fahrt (500) A zu zumindest einer weiterem Fahrt (500) B, aufgrund zumindest einer Übereinstimmungsprüfung (1130) in d.

2. Ein System oder Anordnung nach Anspruch 1, wobei zumindest eine Zuordnung (1110) dazu verwendet wird, um zumindest eine Belegung zumindest einer Fahrt (500) zu berechnen.

3. Ein System oder Anordnung nach einem der vorhergehenden Ansprüche, wobei Wegpunkte (999) einer Fahrt (500) von zumindest einem mobilen chipgesteuerten Endgerät und dessen Geopositionierung (999) stammen.

4. Ein System oder Anordnung nach einem der vorhergehenden Ansprüche, wobei bei der Erzeugung (1120) zumindest eines Fahrtschlüssel (1030) einer oder mehrere Zeitdaten (3060) Zeitintervallen (4010) zugeordnet werden.

5. Ein System oder Anordnung nach einem der vorhergehenden Ansprüche, wobei die potentiell übereinstimmenden Fahrten B (1050) und A (1010) und Wegpunkte (999) derer aus einem Fahrplansystem (500/1010) stammen.

6. Ein System oder Anordnung nach einem der vorhergehenden Ansprüche, wobei die Erzeugung (1120) zumindest eines Fahrtschlüssels (1030) durch zumindest eine Regel geschieht.

7. Ein System oder Anordnung nach Anspruch 6, wobei die Granularität (1210) zumindest eines Zeitdatums (3060) und/oder zumindest eines Wegpunktes (999), bei der Erzeugung (1120) mehrerer Fahrtschlüssel (1030), reduziert wird.

8. Ein System oder Anordnung nach einem der vorhergehenden Ansprüche, wobei für einen Wegpunkt (999) mehrere Fahrtschlüssel (1030) erzeugt (1120) werden.

9. Ein System oder Anordnung nach einem der vorhergehenden Ansprüche, wobei

   e. zumindest eine Mehrzahl an Fahrtschlüsseln (1030) FS-A für zumindest eine Fahrt A (500) aus mehreren Wegpunkten (999) einer Fahrt A (500) berechnet werden; und
   f. zumindest eine Mehrzahl an Fahrtschlüsseln (1030) FS-B für mehrere Fahrten (500) B aus mehreren Wegpunkten (999) einer Fahrt (500) B berechnet werden; und
   g. zumindest mehrere Übereinstimmungsprüfungen (1130) von zumindest mehreren Fahrtschlüsseln (1030) FS-A und FS-B durchgeführt werden; und
   h. zumindest mehrere Ergebnisse von Übereinstimmungen (1210) quantifiziert (3120) werden; und
   i. zumindest eine Entscheidung über zumindest eine Zuordnung (1110) zwischen zumindest einer Fahrt (500) A und zumindest einer Fahrt (500) B zumindest ein quantifiziertes Ergebnis (1210) von h. verwendet.

10. Ein System oder Anordnung von Anspruch 9, wobei eine Quantifizierung (3120) in h. durchgeführt wird, indem die Anzahl von Übereinstimmungen (1130) von Fahrtschlüsseln (1030) für mehrere Fahrten A (500) und Fahrten B (500) gezählt wird.

11. Ein System oder Anordnung nach einem der vorhergehenden Ansprüche, wobei bei der Erzeugung (1120) eines Fahrtschlüssel (1030) zumindest ein Wegpunkt (999) einer zoomfähigen Geodatenstruktur (4050) zuordnet wird.

12. Ein System oder Anordnung nach einem der vorhergehenden Ansprüche, wobei zumindest eine Ausgabe zumindest einer Entscheidung (1140) über zumindest eine Zuordnung (1110) erfolgt.

**13.** Ein System oder Anordnung nach einem der vorhergehenden Ansprüche, wobei zumindest ein Ergebnis (1210) einer weiteren Übereinstimmungsprüfung (1130) von zumindest einem weiteren Fahrtschlüssel (1130) dazu verwendet wird, um eine zuvor erfolgte Zuordnung (1110) von konkreten Fahrten A und B aufzulösen.

**14.** Ein Verfahren für das Erstellen von Fahrtenzuordnungen (1110), wobei das Verfahren zumindest die folgenden Schritte aufweist:

a. Zuordnen von Wegpunkten (999) und Zeiten (3060) zu zwei oder mehr unterschiedlichen Fahrten (500).
b. Granularitätsreduktion (1120) von Wegpunkten (999) und Zeiten 3060 und erzeugen von zwei und mehr Fahrtschlüsseln (1030) und Zuordnen dieser zu Fahrten (500).
c. Übereinstimmungsprüfung (1130) von zumindest zwei Fahrtschlüsseln (1030), die zumindest zwei unterschiedlichen Fahrten (500) zugeordnet sind.
d. Entscheidung (1140) über zumindest eine Fahrtenzuordnung (1110), aufgrund zumindest eines Ergebnisses (1210) zumindest einer Übereinstimmungsprüfung (1130).
e. Ausgabe zumindest einer Fahrtenzuordnung (1110).

**15.** Ein Computerprogramm, das Instruktionen aufweist, um ein Verfahren nach Anspruch 14 auszuführen.

**Fig. 1a**

**1100** Zuordnen von Wegpunkten und Zeiten zu zwei oder mehr unterschiedlichen Fahrten.

**1120** Erzeugen von Fahrtschlüsseln (FS) durch Granularitätsreduktionen von Wegpunkten und Zeiten.

**1130** Übereinstimmungsprüfung vom zumindest zwei Fahrtschlüsseln (FS) die zumindest zwei unterschiedlichen Fahrten zugeordnet sind.

**1140** Entscheidung über zumindest eine Fahrtenzuordnung aufgrund zumindest eines Ergebnisses zumindest einer Übereinstimmungsprüfung.

**Fig. 1b**

**500/1010**

Fahrtdaten:
Z.B. Wegpunkt-Zeit-Fahrtschlüsseldatenbank

Fahrtenzuordnung

Fuzzifizirender Übereinstimmungsprüfer

Übereinstimmungen

**1200/1120/1130/1140**

**1210**

**1110**

Alternative Fahrtdaten:
Z.B.: Smartphonefahrt oder Belegungssystemdaten

**500/1050**

**Fig. 1c**

**Fig. 1d**

**Fig. 2a**

③ Konkrete Fahrt ohne Zuordnung ⎯ 1050/500

Zuordnen von Wegpunkten und Zeiten zu zwei oder mehr ④ unterschiedlichen Fahrten ⎯ 1100

1010 ①

Fahrplan, Haltestellen

3060

⑤ Fahrzeit

999 Wegpunkt/ Haltestelle

Fuzzyfizieren

1120

1170/ 1030/ 3030

Fuzzyfizierung 1120

⑥ Grandularitätsreduzierte Fahrt Wegpunkte

②

1010/ 1030/1050 3090/4010/ 4050/500/ 1120/3060

Grandularitätsreduzierte Haltestellen Abfahrtszeiten Buckets – Linie - Richtung

Matching ⑦

1130

Potentielle Fahrt Zuordnung

1110

Transformation

⑧

3120

Erweiterbare Zuordnung- Datenstruktur ⎯ 3130

3140

⑨ Bewertung 1140

1110 Eindeutige Zuordnung ⑩

3170

⑪ Belegungsberechnung

## Fig. 2b

999    1010/500                    3060        10

| Haltestelle | Linie | Fahrplanfahrt | Abfahrt | Zeileninindex |
|---|---|---|---|---|
| Am Aubuckel | 2 | Fahrt 1 | 11:05 | 1 |
| Neckarstraße | 2 | Fahrt 1 | 11:10 | 2 |
| Am Aubuckel | 2 | Fahrt 2 | 11:35 | 3 |
| Feldstraße | 57 | Fahrt 3 | 11:19 | 4 |
| Ziethenstrasse | 7 | Fahrt 4 | 11:15 | 5 |

## Fig. 2c

1120/4010        1120/4050            3090/1030        500/1010        10

| Bucketzuordung | Geohash (Genauigkeit 600m) | Fahrtschlüssel | Linie | Fahrt | Zeilenindex |
|---|---|---|---|---|---|
| 11-0 | u0y19c | u0y19c:11:0 | 2 | Fahrt 1 | 1 |
| 11-0 | u0y1d0 | u0y1d0:11:0 | 2 | Fahrt 1 | 2 |
| 11-1 | u0y19c | u0y19c:11:1 | 2 | Fahrt 2 | 3 |
| 11-0 | u0y1d3 | u0y1d3:11:1 | 57 | Fahrt 3 | 4 |
| 11-0 | u0y19c | u0y19c:11:0 | 7 | Fahrt 4 | 5 |

## Fig. 2d

999                    3060/*1050*                    3060/1010

| Haltestelle/Wegpunkt | Ist Abfahrt | Soll Abfahrt |
|---|---|---|
| Am Aubuckel – Hält 50m Entfernt, da Baustelle | 11:09 | 11:05 |

## Fig. 2e

999      1120/4050      1170/1030/3030      1170/1030/3090

| Haltestelle/ Wegpunkt | Geohash | Fahrtschlüssel Ist Abfahrt | Fahrtschlüssel Soll Abfahrt |
|---|---|---|---|
| Am Aubuckel – Hält 50m Entfernt, da Baustelle | u0y19c | u0y19c:11:0 | u0y19c:11:0 |

## Fig. 2f

999      1120/4050      1170/1030/3030      1170/1030/3090

| Haltestelle/ Wegpunkt | Geohash | Fahrtschlüssel Ist Abfahrt | Fahrtschlüssel Soll Abfahrt |
|---|---|---|---|
| Originales Bucket: Ist Abfahr: 11:09 Soll Abfahrt: 11:05 Am Aubuckel/ Am Aubuckel 50m in dessen Nähe | u0y19c | u0y19c:11:0 | u0y19c:11:0 |
| Beispiel Randbucket 1 aufgrund von Zeit (vorheriges Zeit bucket 10: 40-11 Uhr bucket 2) | u0y19c | u0y19c:10:0 | u0y19c:10:0 |
| Beispiel Randbucket 1 aufgrund von Zeit (vorheriges Zeit bucket 11: 20-40 Uhr bucket 2) | u0y19c | u0y19c:11:1 | u0y19c:11:1 |
| Beispiel Randbuckets 1 aufgrund von Geoposition (u0y19c Nachbarn sind: u0y1d0, u0y19f, u0y1d4, u0y199, u0y1d1, u0y198, u0y19b, u0y1d0) | u0y19c | u0y1d0:11:0, u0y19f:11:0, u0y1d4:11:0, u0y199:11:0, u0y1d1:11:0, u0y198:11:0, u0y19b:11:0, u0y1d0:11:0 | u0y1d0:11:0, u0y19f:11:0, u0y1d4:11:0, u0y199:11:0, u0y1d1:11:0, u0y198:11:0, u0y19b:11:0, u0y1d0:11:0 |
| Kombination von Randbucket Zeit und Randbucket geo. Beispiel Randbucket 11: 20-40 und u0y1d0 | u0y19c | u0y1d0:11:1 | u0y1d0:11:1 |

**Fig. 2g**

1210                    500

| Potentielle Haltestelle/ Wegpunkt | Potentielle Linie | Potentielle Fahrt |
|---|---|---|
| Am Aubuckel – Hält 50m Entfernt, da Baustelle - 11:09 | 2 | Fahrt 1 |
| Ziethenstrasse | 7 | Fahrt 4 |

**Fig. 2h**

500                              3130

| Potentielle Fahrten | Anzahl Zuordnungen |
|---|---|
| Fahrt 1 | 1 |
| Fahrt 4 | 1 |

**Fig. 2i**

999                                      3060/*1050*

| Haltestelle | Ist Abfahrt |
|---|---|
| Neckarstraße | 11:14 |

**Fig. 2j**

999                  1120/4050              1170/1030/3030

| Haltestelle/ Wegpunkt | Geohash | Fahrtschlüssel Ist Abfahrt |
|---|---|---|
| Neckarstraße | u0y1d0 | u0y1d0:11:0 |

**Fig. 2k**

1210

| Haltestelle / Wegpunkt | Potentielle Fahrt | Potentielle Linie |
|---|---|---|
| Am Neckarstraße | Fahrt 1 | 2 |

**Fig. 2l**

3130

| Potentielle Fahrt | Potentielle Linie | Anzahl Zuordnungen |
|---|---|---|
| Fahrt 1 | 2 | 2 |
| Fahrt 4 | 7 | 1 |

Europäisches
Patentamt

European
Patent Office

Office européen
des brevets

**EUROPÄISCHER RECHERCHENBERICHT**

**Nummer der Anmeldung**

**EP 22 19 0257**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/180610 A1 (LIU WEI [CN] ET AL) 13. Juni 2019 (2019-06-13) <br> * Zusammenfassung * <br> * Abbildung 1 * <br> * Absätze [0006] – [0021], [0027], [0032] – [0053], [0060] * <br> * Ansprüche 1-18 * <br> ----- | 1-15 | INV. <br> G08G1/127 <br> H04W4/029 <br> G08G1/01 <br> G06Q50/30 |
| X | DE 10 2018 216222 A1 (AUDI AG [DE]) 26. März 2020 (2020-03-26) <br> * Zusammenfassung * <br> * Absätze [0001], [0011], [0012], [0016], [0020], [0021], [0023], [0040] – [0044] * <br> * Ansprüche 1-11 * <br> * Abbildung 1 * <br> ----- | 1-15 | |
| X <br><br> A | EP 3 796 683 A1 (BAYERISCHE MOTOREN WERKE AG [DE]) 24. März 2021 (2021-03-24) <br> * Zusammenfassung * <br> * Absätze [0001], [0005], [0006], [0009], [0010], [0016], [0019], [0029] – [0031], [0034], [0035], [0038], [0071], [0079] – [0098] * <br> * Ansprüche 1-15 * <br> * Abbildungen 1-3,5,6,8 * <br> ----- | 1,3,4, 6-15 <br><br> 2,5 | **RECHERCHIERTE SACHGEBIETE (IPC)** <br><br> G01G <br> G06Q <br> H04W |

Der vorliegende Recherchenbericht wurde für alle Patentansprüche erstellt

| Recherchenort | Abschlußdatum der Recherche | Prüfer |
|---|---|---|
| Den Haag | 6. Januar 2023 | Quartier, Frank |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 22 19 0257

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-01-2023

| Im Recherchenbericht angeführtes Patentdokument | Datum der Veröffentlichung | Mitglied(er) der Patentfamilie | Datum der Veröffentlichung |
|---|---|---|---|
| US 2019180610 A1 | 13-06-2019 | CN 107463940 A<br>US 2019180610 A1<br>WO 2019001044 A1 | 12-12-2017<br>13-06-2019<br>03-01-2019 |
| DE 102018216222 A1 | 26-03-2020 | KEINE | |
| EP 3796683 A1 | 24-03-2021 | KEINE | |

Für nähere Einzelheiten zu diesem Anhang : siehe Amtsblatt des Europäischen Patentamts, Nr.12/82

EPO FORM P0461